# EUROPEAN PATENT APPLICATION

(11) **EP 4 648 398 A1**
(43) Date of publication of application: **12.11.2025**
(21) Application number: 25174470.2
(22) Date of filing: 06.05.2025
(51) Int. Cl.: H04N 1/00

(54) **IMAGE PROCESSING SYSTEM, IMAGE READING APPARATUS, IMAGE PROCESSING PROGRAM AND WORKFLOW UTILIZATION PROGRAM WITH USABLE SETTINGS MANAGEMENT**

(30) Priority: 10.05.2024 JP 2024077608
(71) Applicant: KYOCERA Document Solutions Inc., Osaka-shi, Osaka 540-8585 (JP)
(72) Inventor: NAKATANI, Ryusuke, Osaka-shi, Osaka, 540-8585 (JP); SATO, Masafumi, Osaka-shi, Osaka, 540-8585 (JP); HIWATARI, Tatsuya, Osaka-shi, Osaka, 540-8585 (JP); KANDA, Miwako, Osaka-shi, Osaka, 540-8585 (JP)
(74) Representative: Herrero & Asociados, S.L.

(57) **Abstract**

An image processing system (20) includes a first communication device (23), a first operation device (21), and a first control device (25) that acts as an image processing device (25A). The first communication device (23) communicates via a network with an image reading apparatus (40) having a scanner (44). The image processing device (25A) executes a workflow, with respect to an image read by the scanner (44). Upon receipt through the first operation device (21), of a designation by a predetermined manager, of a system-settable value that a user of the image processing system (20) is permitted to set, out of the system-settable values that can be set for setting items related to the workflow, the image processing device (25A) sets the designated system-settable value, as a user-settable value.

## Description

### BACKGROUND

The present invention relates to an image processing system that executes a workflow indicating a process including operations with respect to an image read by an image reading apparatus, an image reading apparatus, an image processing program, and a workflow utilization program.

An information processing system is generally known that can designate an input item of a dependent, by acquiring prospective input items of the dependent, associated with an input item of a dependee, from a related external service provider.

### SUMMARY

The invention proposes further improvement of the foregoing technique.

In an aspect, the invention provides an image processing system including a first communication device, a first operation device, and a first control device. The first communication device communicates via a network with an image reading apparatus having a scanner that reads an image of a document. To the first operation device, an instruction of a user is inputted. The first control device includes a processor, and acts, when the processor executes an image processing program, as an image processing device. The image processing device executes a workflow, with respect to the image read by the scanner. Upon receipt through the first operation device, of a designation by a predetermined manager, of a system-settable value that a user of the image processing system is permitted to set, out of the system-settable values that can be set for setting items related to the workflow, the image processing device sets the designated system-settable value, as a user-settable value.

In another aspect, the invention provides an image reading apparatus including a display device, a scanner, a second communication device, and a second control device. The scanner reads an image of a document. The second communication device communicates via a network with an image processing system that executes a workflow, with respect to the image read by the scanner. The second control device includes a processor, and acts as a workflow utilization device, when the processor executes a workflow utilization program. Upon receipt of information indicating a user-settable value that a user of the image processing system is permitted to set for a setting item related to the workflow, from the image processing system through the second communication device, the workflow utilization device causes the display device to display the user-settable value indicated by information received.

In still another aspect, the invention provides an image processing program. The image processing program is configured to cause a computer, including a first communication device that communicates via a network with an image reading apparatus including a scanner that reads an image of a document, a first operation device to which an instruction of a user is inputted, and a processor, to act, when the processor executes the image processing program, as an image processing device that executes a workflow with respect to the image read by the scanner. Upon receipt through the first operation device, of a designation by a predetermined manager, of a system-settable value that a user of the image processing system is permitted to set, out of the system-settable values that can be set for setting items related to the workflow, the image processing device sets the designated system-settable value, as a user-settable value.

In still another aspect, the invention provides a workflow utilization program. The workflow utilization program is configured to cause a computer, including a display device, a scanner that reads an image of a document, a second communication device that communicates via a network with an image processing system that executes a workflow, with respect to the image read by the scanner, and a processor, to act as a workflow utilization device, when the processor executes the workflow utilization program. Upon receipt of information indicating a user-settable value that a user of the image processing system is permitted to set for a setting item related to the workflow, from the image processing system through the second communication device, the workflow utilization device causes the display device to display the user-settable value indicated by information received.

### BRIEF DESCRIPTION OF THE DRAWINGS

Fig. 1 is a block diagram showing a configuration of a system according to a first embodiment of the invention;
Fig. 2 is a block diagram showing a configuration of an image processing system, constituted of a single computer;
Fig. 3 presents an example of tenant management information;
Fig. 4 presents an example of user management information;
Fig. 5 presents an example of a workflow;
Fig. 6 presents an example of workflow management information;
Fig. 7 presents an example of system-settable value information;
Fig. 8 presents an example of user-settable value information;
Fig. 9 is a block diagram showing a configuration of a manager terminal device;
Fig. 10 is a block diagram showing a configuration of an image reading apparatus built as an MFP;
Fig. 11 is a flowchart showing an operation of the image processing system, performed when a user-settable value for a file format item is designated;
Fig. 12 presents an example of a file format designation screen;
Fig. 13 is a flowchart showing an operation of the image processing system, performed when a character string inputted in a textbox of the file format designation screen is changed;
Fig. 14 is a flowchart showing an operation of the image processing system, performed when designation of the system-settable value according to the character string inputted in the textbox is instructed;
Fig. 15A presents an example of the file format designation screen, with one set value button displayed therein;
Fig. 15B presents an example of the file format designation screen, with two set value buttons displayed therein;
Fig. 15C presents an example of the file format designation screen, with three set value buttons displayed therein;
Fig. 15D presents an example of the file format designation screen, with four set value buttons displayed therein;
Fig. 15E presents an example of the file format designation screen, with five set value buttons displayed therein;
Fig. 16 is a flowchart showing an operation of the image processing system, performed when a list display button in the file format designation screen is pressed;
Fig. 17 is a flowchart showing an operation of the image processing system, performed when designation of a system-settable value displayed in the settable value designation list is instructed;
Fig. 18 is a sequence chart showing an operation of the system, performed when an available workflow is displayed by the image reading apparatus;
Fig. 19 presents an example of a workflow selection screen;
Fig. 20 is a sequence chart showing an operation of the system, performed when a workflow button in the workflow selection screen is pressed;
Fig. 21 is a flowchart showing an operation of the image processing system, performed when identifying a settable value for the file format item;
Fig. 22 is a flowchart showing an operation of the image processing system, performed when displaying the file format setting screen;
Fig. 23 presents an example of the file format setting screen, not showing an initial value of the file format;
Fig. 24 presents an example of the file format setting screen, showing the initial value of the file format;
Fig. 25 is a block diagram showing a configuration of a system according to a second embodiment of the invention;
Fig. 26 is a block diagram showing a configuration of an image processing system, constituted of a single computer;
Fig. 27 presents an example of setting history information;
Fig. 28 presents an example of display order determination condition information; and
Fig. 29 is a flowchart showing an operation of the image processing system, performed to identify a settable value for the file format item.

### DETAILED DESCRIPTION

Hereafter, an embodiment of the invention will be described, with reference to the drawings.

### First Embodiment

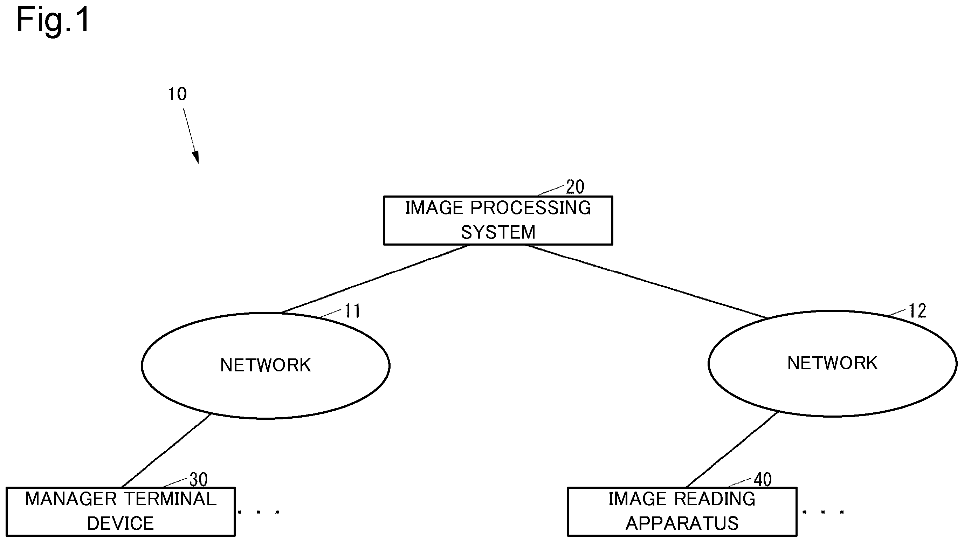

First, a configuration of a system 10 according to a first embodiment of the invention will be described. Fig. 1 is a block diagram showing the configuration of the system 10.

As shown in Fig. 1, the system 10 includes an image processing system 20 that executes a specific processing on an image read by an image reading apparatus 40. The image processing system 20 may be constituted of a single computer such as a personal computer (PC), or a plurality of computers. The device management system 20 may be configured as a cloud server. Examples of the user of the image processing system 20 at least include a manager of the image processing system 20, and general users thereof.

The system 10 includes a manager terminal device 30 such as a PC, a smartphone, or a tablet terminal device, to be used by the manager. The system 10 may include, in addition to the manager terminal device 30, one or more manager terminal devices configured similarly to the manager terminal device 30.

The system 10 includes an image reading apparatus 40, such as a multifunction peripheral (MFP) or a single-function scanner. The system 10 may include, in addition to the image reading apparatus 40, one or more image reading apparatuses configured similarly to the image reading apparatus 40.

The image processing system 20 and the manager terminal device 30 can communicate with each other, via a network 11 such as a local area network (LAN) or the internet. The image processing system 20 and the image reading apparatus 40 can communicate with each other, via a network 12 such as a local area network (LAN) or the internet.

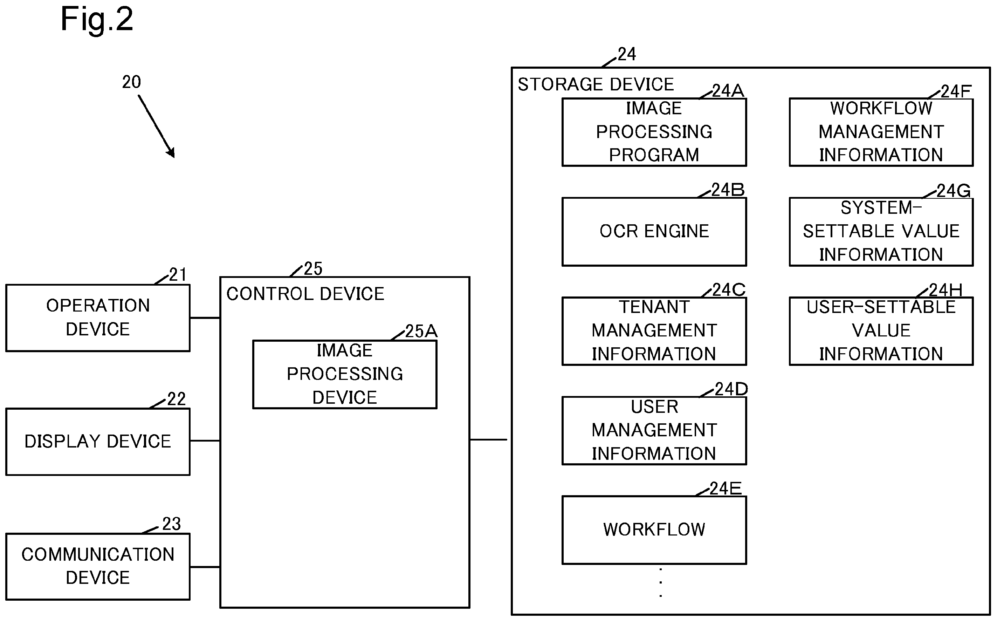

Fig. 2 is a block diagram showing a configuration of the image processing system 20 constituted of a single computer. As shown in Fig. 2, the image processing system 20 includes an operation device 21, a display device 22, a communication device 23, a storage device 24, and a control device 25.

The operation device 21 includes, for example, a keyboard and a mouse for inputting various operations. The display device 22 includes, for example, a liquid crystal display (LCD) for displaying various types of information. The communication device 23 performs communication with an external device, via a network such as a local area network (LAN) or the internet, or directly through wired or wireless communication. The storage device 24 includes a non-volatile memory unit such as a semiconductor memory or a hard disk drive (HDD), for storing various types of information. The control device 25 controls the overall operation of the image processing system 20.

The storage device 24 can store therein an image processing program 24A, for executing a specific processing on an image read by the image reading apparatus 40. The image processing program 24A may be, for example, installed in the image processing system 20 during the manufacturing process thereof, additionally installed in the image processing system 20 from an external storage medium such as a universal serial bus (USB) memory, or additionally installed in the image processing system 20 from the network.

The storage device 24 can store therein an OCR engine 24B, which is software for executing an optical character recognition (OCR) process. The OCR engine 24B may be, for example, installed in the image processing system 20 during the manufacturing process thereof, additionally installed in the image processing system 20 from an external storage medium such as a universal serial bus (USB) memory, or additionally installed in the image processing system 20 from the network.

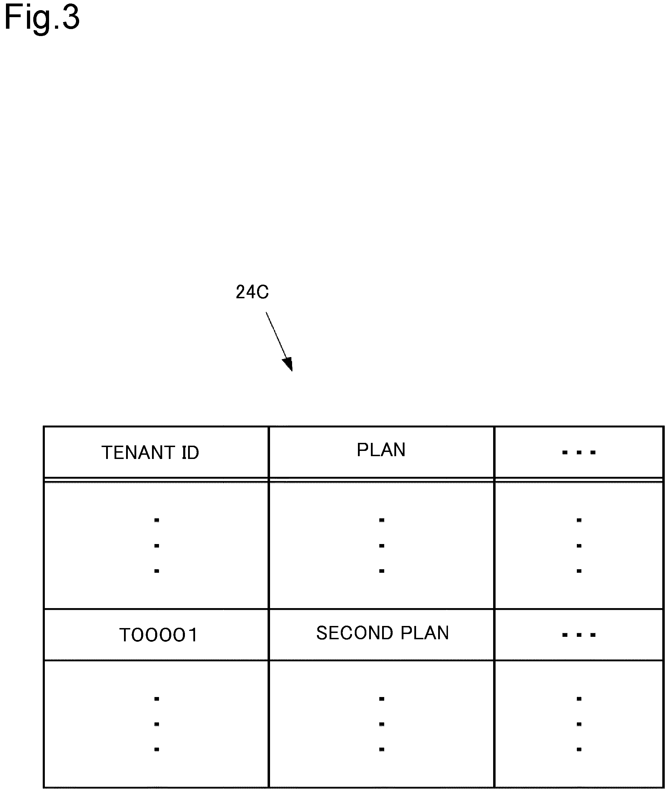

The storage device 24can store therein a tenant management information 24C for managing tenants in the image processing system 20. Fig. 3 presents an example of the tenant management information 24C. As shown in Fig. 3, the tenant management information 24C includes the tenant ID serving as the identification information of the tenant, and the plan contracted by the tenant, among the plans for utilizing the image processing system 20, in association with each other, with respect to each of the tenants.

Fig. 3 shows a part of the content of the tenant management information 24C. Examples of the plan that the tenant can make contract include a first plan, and a second plan more expensive than the first plan. Under the first plan, the tenant is unable to utilize the OCR engine 24B. The second plan allows the tenant to utilize the OCR engine 24B.

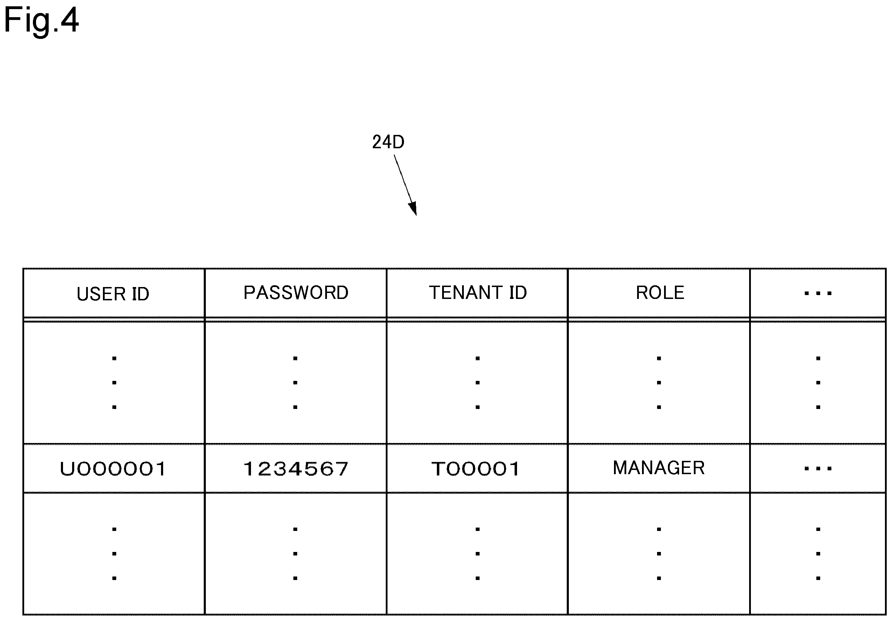

As shown in Fig. 2, the storage device 24 can store therein user management information 24D, for managing the users of the image processing system 20. Fig. 4 presents an example of the user management information 24D.

As shown in Fig. 4, the user management information 24D includes the user ID serving as the identification information of the user, the password of the user, the tenant ID of the tenant to which the user belongs, and the role of the user indicating whether the user is a general user or the manager in the tenant, in association with each other, with respect to each of the users. Fig. 4 shows a part of the content of the user management information 24D.

As shown in Fig. 2, the storage device 24 can store therein workflows 24E, indicating the process including a processing with respect to the image read by the image reading apparatus 40. The storage device 24 may store therein, in addition to the workflow 24E, one or more workflows configured similarly to the workflow 24. To the workflow, the identification information (hereinafter, "workflow ID") is assigned by the image processing system 20.

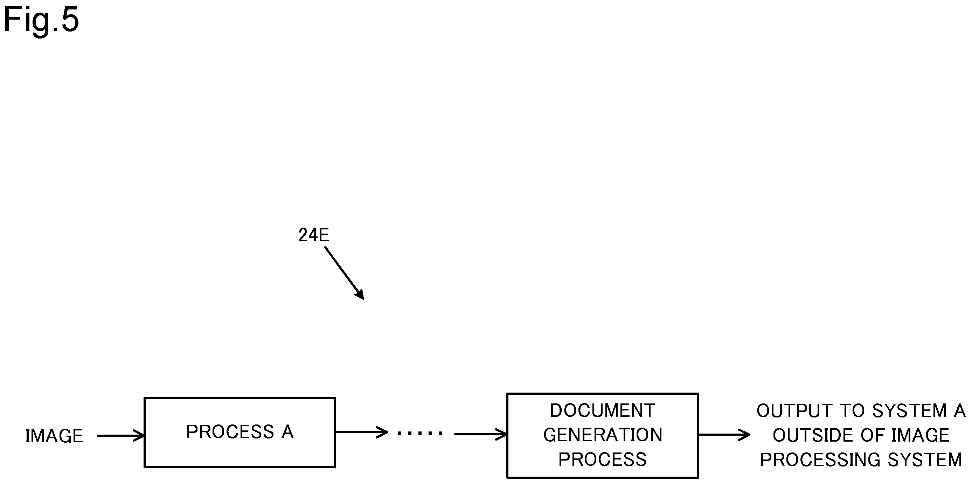

Fig. 5 presents an example of the workflow 24E. As shown in Fig. 5, the workflow 24E indicates the flow of the process executed by the image processing system 20. Fig. 5 shows a part of the content of the workflow 24E. Examples of the process specified in the workflow 24E include generating a document on the basis of the image read by the image reading apparatus 40 (hereinafter, "document generation process").

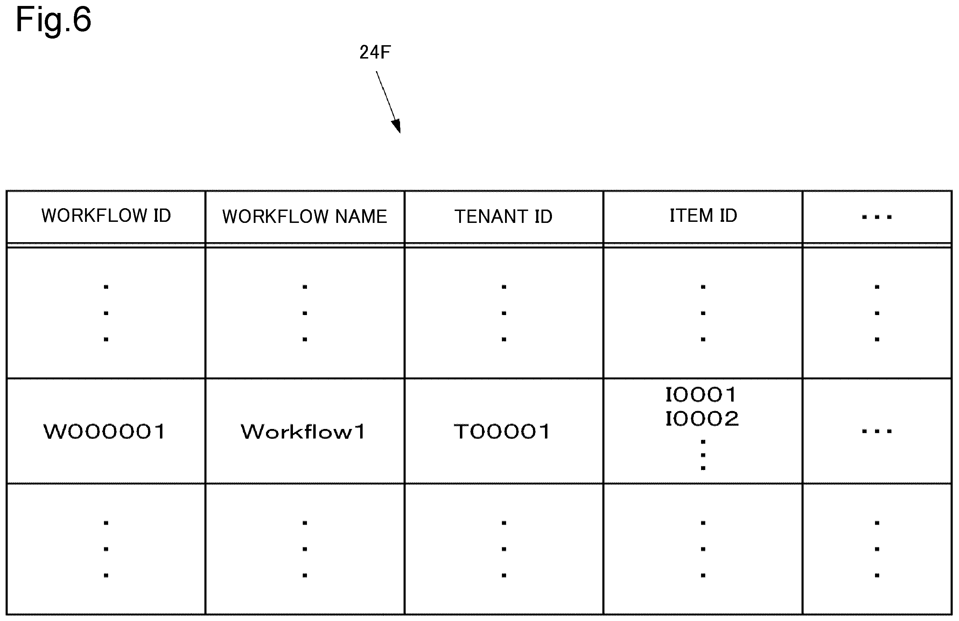

As shown in Fig. 2, the storage device 24 can store therein workflow management information 24F, for managing the workflow. Fig. 6 presents an example of the workflow management information 24F.

As shown in Fig. 6, the workflow management information 24F includes the workflow ID, the name of the workflow (hereinafter, "workflow name"), the tenant ID of the tenant who executes the workflow, the identification information of the setting item related to the workflow (hereinafter, "item ID"), in association with each other, with respect to each of the workflows. A plurality of item IDs may be associated with one workflow. Fig. 6 shows a part of the content of the workflow management information 24F.

For example, the setting items with respect to the document generation process include the file format of the document to be generated on the basis of the image read by the image reading apparatus 40 (hereinafter, "file format item"). In this embodiment, the item ID of the file format item is "I0001".

As shown in Fig. 2, the storage device 24 can store therein system-settable value information 24G, indicating the value that can be set by the image processing system 20, for the setting items related to the workflow (hereinafter, "system-settable value").

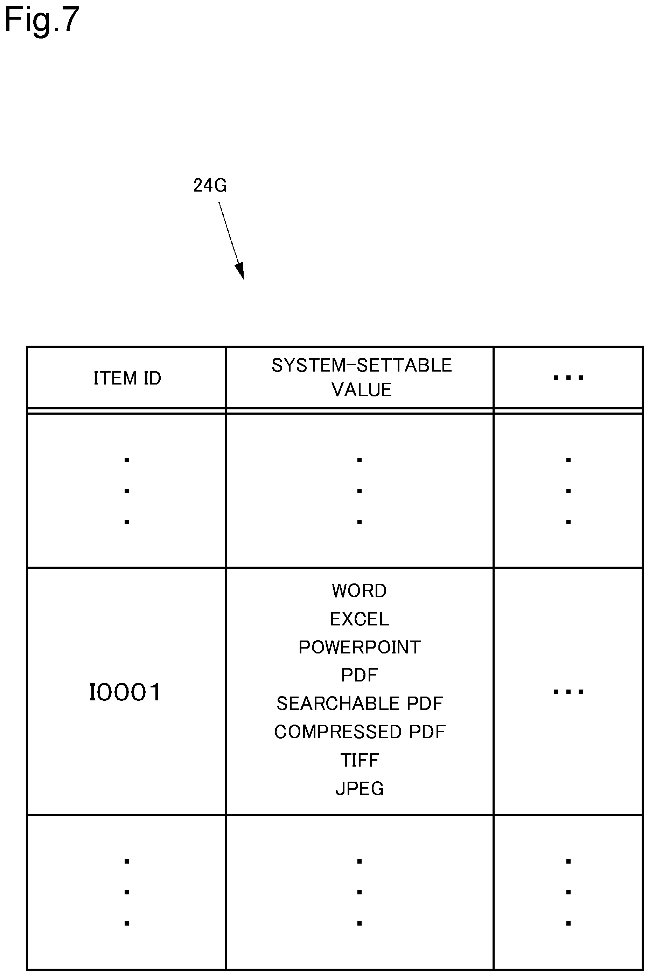

Fig. 7 presents an example of the system-settable value information 24G. The system-settable value information 24G includes the item ID of the setting items related to the workflow, and the system-settable value for the setting item, in association with each other, with respect to each of the setting items. Fig. 7 shows a part of the content of the system-settable value information 24G.

Examples of the value of the file format item having the item ID "I0001" include the Word format from Microsoft (registered trademark), the Excel format known as Microsoft Excel (registered trademark), the PowerPoint format known as Microsoft PowerPoint (registered trademark), the portable document format (PDF), the Searchable PDF format, the compressed PDF, the tag image file format (TIFF), and the joint photographic experts group (JPEG) format.

When generating a document of the Word format, the Excel format, the PowerPoint, the Searchable PDF, or the compressed PDF through the document generation process, the image processing system 20 has to utilize the OCR engine 24B. On the other hand, when generating a document of the PDF, the TIFF, or the JPEG format through the document generation process, the image processing system 20 does not have to utilize the OCR engine 24B.

As shown in Fig. 2, the storage device 24 can store therein user-settable value information 24H, indicating values that can be set by the user, for the setting items related to the workflow (hereinafter, "user-settable value").

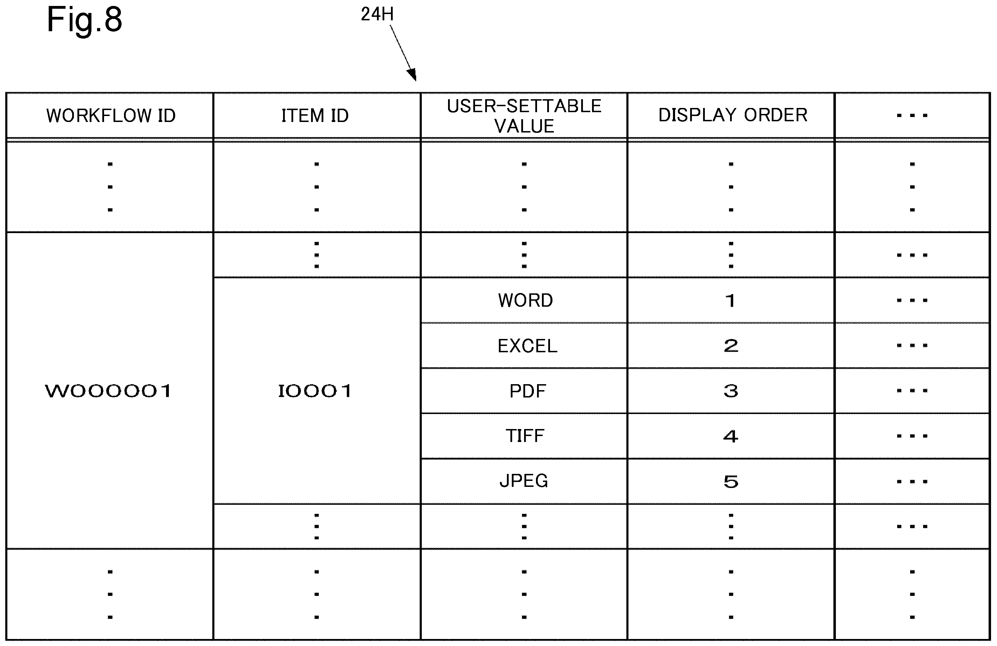

Fig. 8 presents an example of the user-settable value information 24H. As shown in Fig. 8, the user-settable value information 24H includes the workflow ID of the workflow to be executed, the item ID of the setting item, the user-settable values for the setting item, and the display order of each user-settable value for the setting item, in association with each other, with respect to each of the combinations of the workflow and the setting item. Fig. 8 shows a part of the content of the user-settable value information 24H.

The control device 25 shown in Fig. 2 includes, for example, a central processing unit (CPU), a read-only memory (ROM), and a random-access memory (RAM). The ROM contains programs and various types of data. The RAM serves as the operating region for the CPU of the control device 25. The CPU of the control device 25 executes the program stored in the storage device 24 or the ROM of the control device 25.

The control device 25 realizes an image processing device 25A that executes a specific processing on the image read by the image reading apparatus, by executing the image processing program 24A.

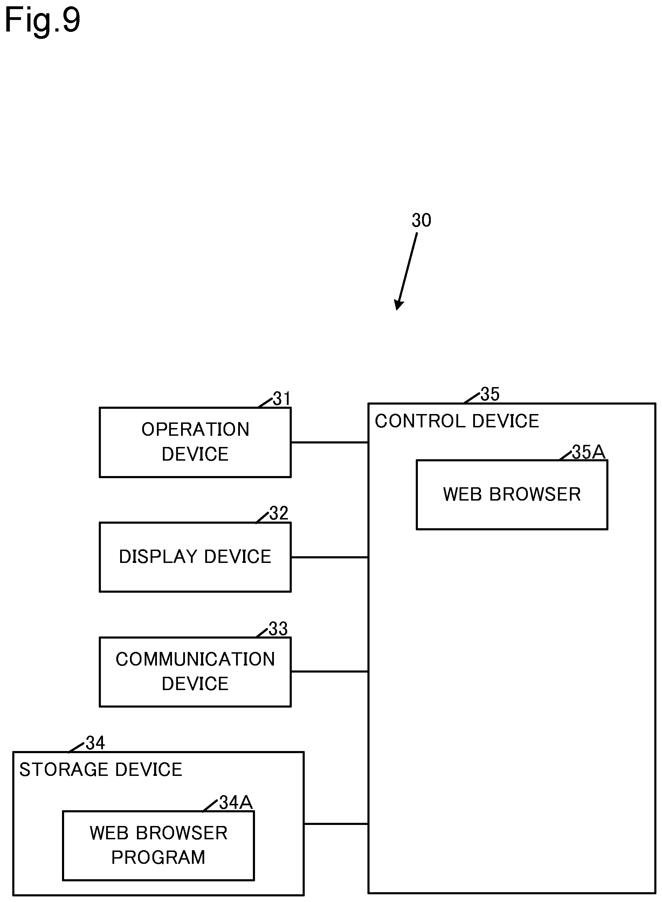

Fig. 9 is a block diagram showing a configuration of the manager terminal device 30. As shown in Fig. 9, the manager terminal device 30 includes an operation device 31, a display device 32, a communication device 33, a storage device 34, and a control device 35.

The operation device 31 includes, for example, a keyboard and a mouse for inputting various operations. The display device 32 includes, for example, an LCD for displaying various types of information. The communication device 33 performs communication with an external device, via a network such as a LAN or the internet, or directly through wired or wireless communication. The storage device 34 includes a non-volatile memory unit such as a semiconductor memory or an HDD, for storing various types of information. The control device 35 controls the overall operation of the manager terminal device 30.

The storage device 34 can store therein a program for the web browser (hereinafter, "web browser program") 34A. The web browser program 34A may be, for example, installed in the manager terminal device 30 during the manufacturing process thereof, additionally installed in the manager terminal device 30 from an external storage medium such as a USB memory, or additionally installed in the manager terminal device 30 from the network.

The control device 35 includes, for example, a CPU, a ROM, and a RAM. The ROM contains programs and various types of data. The RAM serves as the operating region for the CPU of the control device 35. The CPU of the control device 35 executes the program stored in the storage device 34 or the ROM of the control device 35.

The control device 35 realizes a web browser 35A, by executing the web browser program 34A.

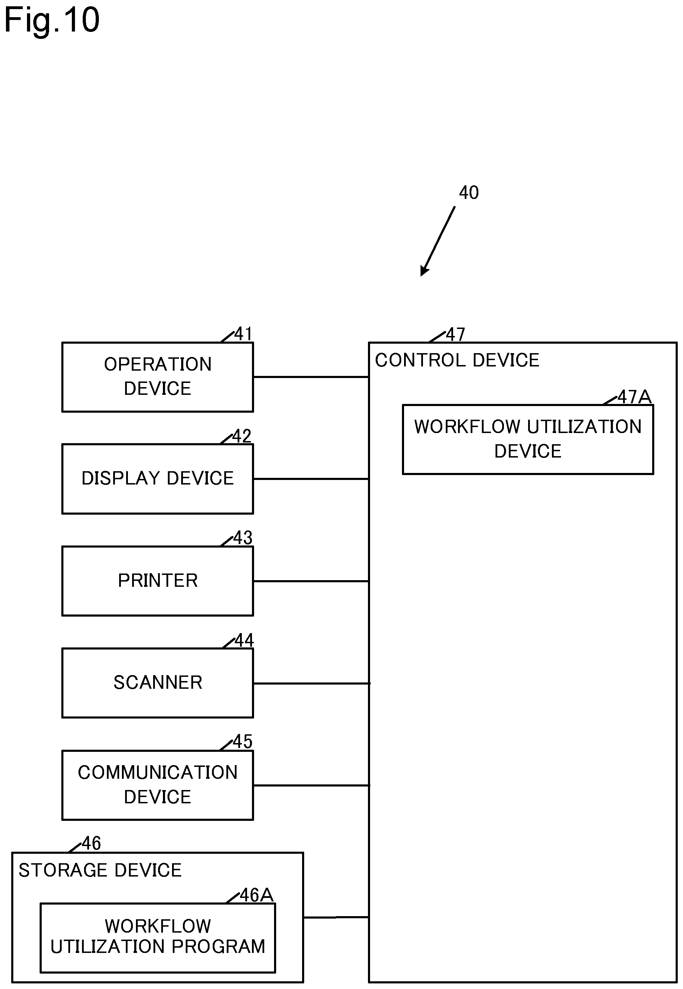

Fig. 10 is a block diagram showing a configuration of the image reading apparatus 40, built as an MFP. As shown in Fig. 10, the image reading apparatus 40 includes an operation device 41, a display device 42, a printer 43, a scanner 44, a communication device 45, a storage device 46, and a control device 47.

The operation device 41 includes, for example, buttons for inputting various operations. The display device 42 includes, for example, an LCD for displaying various types of information. The printer 43 prints an image on a recording medium such as a paper sheet. The scanner 44 reads an image from a document. The communication device 45 performs communication with an external device, via a network such as a LAN or the internet, or directly through wired or wireless communication. The storage device 46 includes a non-volatile memory unit such as a semiconductor memory or an HDD, for storing various types of information. The control device 47 controls the overall operation of the image reading apparatus 40.

The storage device 46 can store therein a workflow utilization program 46A, for utilizing a workflow to be executed by the image processing system 20. The workflow utilization program 46A may be, for example, installed in the image reading apparatus 40 during the manufacturing process thereof, additionally installed in the image reading apparatus 40 from an external storage medium such as a USB memory, or additionally installed in the image reading apparatus 40 from the network.

The control device 47 includes, for example, a CPU, a ROM, and a RAM. The ROM contains programs and various types of data. The RAM serves as the operating region for the CPU of the control device 47. The CPU of the control device 47 executes the program stored in the storage device 46 or the ROM of the control device 47.

The control device 47 realizes a workflow utilization device 47A that utilizes the workflow to be executed by the image processing system 20, by executing the workflow utilization program 46A.

Hereunder, an operation of the system 10 will be described. First, the operation of the image processing system 20, performed to register the workflow, will be described.

The manager can make access to the image processing system 20, from the web browser 35A of the manager terminal device 30, through the website provided by the image processing system 20, and log in to image processing system 20, using the user ID and the password of the manager. When the combination of the user ID and the password of the manager, inputted from the web browser 35A of the manager terminal device 30, is included in the user management information 24D, the image processing device 25A of the image processing system 20 permits the manager to log in.

Upon logging in to the image processing system 20 from the manager terminal device 30, the manager can input an instruction to start the operation for registering the workflow (hereinafter, "workflow registration start instruction"), to the image processing system 20 from the web browser 35A of the manager terminal device 30, through the website provided by the image processing system 20.

When the workflow registration start instruction is inputted, the image processing device 25A of the image processing system 20 causes the display device 32 of the manager terminal device 30 to display a screen for the manager to generate the workflow (hereinafter, "workflow generation screen"), through the web browser 35A of the manager terminal device 30.

The manager can generate the workflow, on the workflow generation screen. To be more specific, the manager can designate the type of the operation to be executed by the image processing system 20, and the flow of the operation, on the workflow generation screen.

On the workflow generation screen, the manager can instruct the registration of the workflow, or instruct the cancellation of the registration of the workflow. When the registration of the workflow is instructed, the image processing device 25A of the image processing system 20 stores the workflow to be registered in the storage device 24, and registers the information regarding the workflow to be registered, in the workflow management information 24F.

On the workflow generation screen, the manager can designate the user-settable values, for each of the setting items related to the workflow.

Hereunder, an operation of the image processing system 20, performed when the user-settable value for the file format item is designated, will be described, as an example of the operation of the image processing system 20 performed when the user-settable value is designated for the setting item related to the workflow.

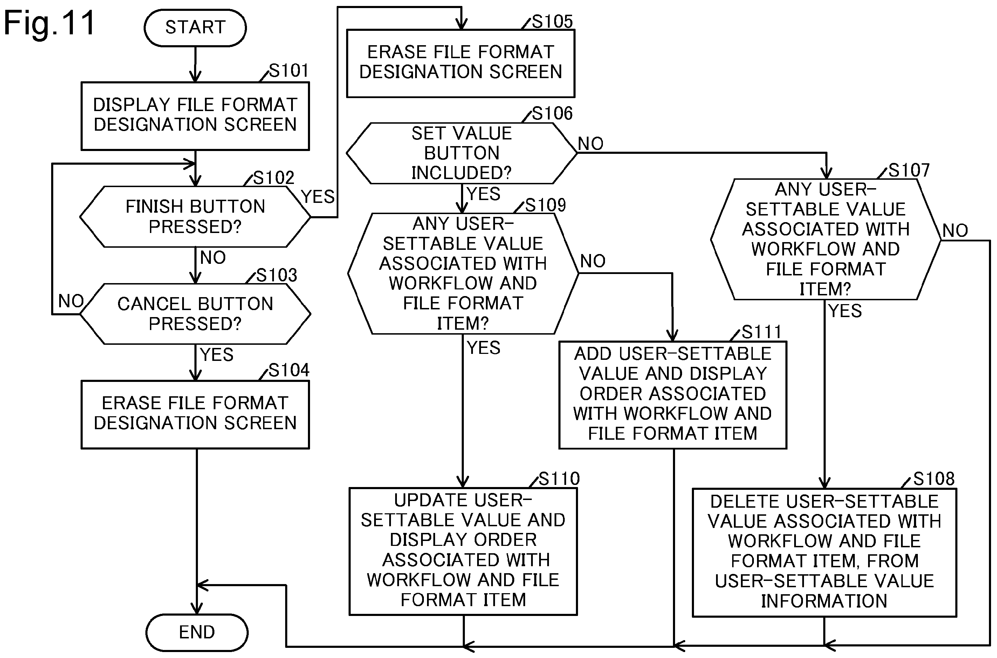

Fig. 11 is a flowchart showing an operation of the image processing system 20, performed when the user-settable value for the file format item is designated.

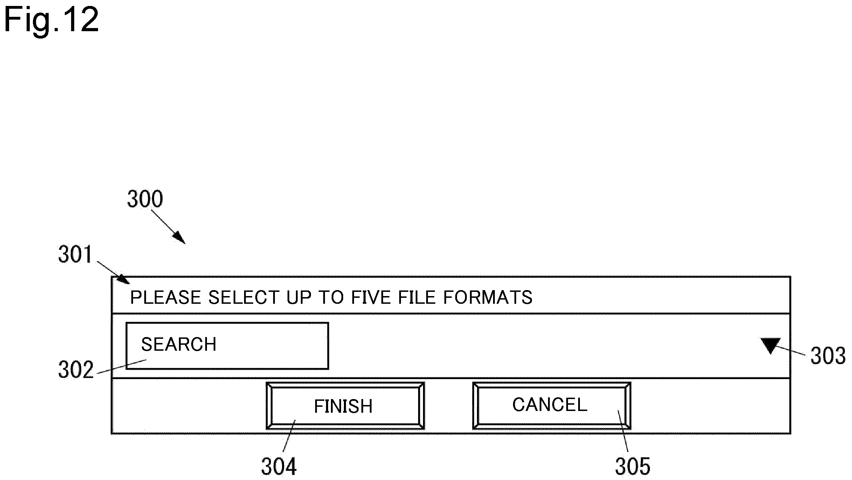

As shown in Fig. 11, the image processing device 25A of the image processing system 20 causes the display device 32 of the manager terminal device 30 to display a screen for designating the user-settable value for the file format item (hereinafter, "file format designation screen") 300 (see Fig. 12), through the web browser 35A of the manager terminal device 30 (step S101).

Fig. 12 presents an example of the file format designation screen 300. As shown in Fig. 12, the file format designation screen 300 includes a message 301 to the manager, a textbox 302, a list display button 303, a finish button 304, and a cancel button 305.

The textbox 302 is a widget for designating the user-settable value for the file format item. The list display button 303 is a widget for displaying a list for designating the user-settable value for the file format item (hereinafter, "settable value designation list"). The finish button 304 is a widget for finishing the designation of the user-settable value for the file format item. The cancel button 305 is a widget for cancelling the designation of the user-settable value for the file format item.

As shown in Fig. 12, while no character string is inputted in the textbox 302, a character string "search" is dimly displayed in the textbox 302, to urge the manager to input a character string. In other words, the dimly displayed character string "search" shown in Fig. 12 is not the character string inputted to the textbox 302. The character string inputted to the textbox is clearly displayed in the file format designation screen 300.

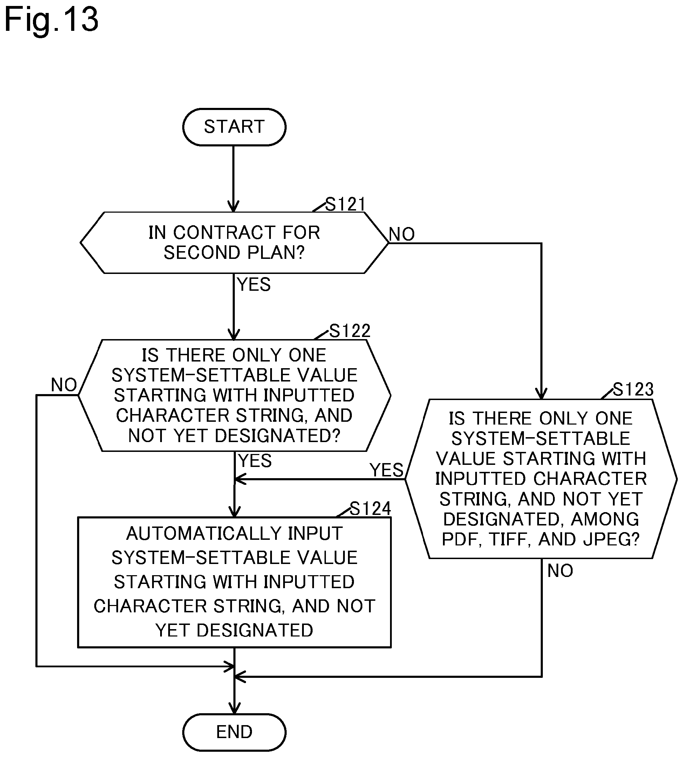

Fig. 13 is a flowchart showing an operation of the image processing system 20, performed when the character string inputted in the textbox 302 of the file format designation screen 300 is changed.

As shown in Fig. 13, the image processing device 25A decides whether the tenant to which the manager who has causes the file format designation screen 300 to be displayed belongs is in contract for the second plan (step S121).

The image processing device 25A identifies the tenant ID associated with the user ID of the manager who has causes the file format designation screen 300 to be displayed, in the user management information 24D. When the plan associated with the identified tenant ID is the second plan in the tenant management information 24C, the image processing device 25A decides that the tenant to which the manager belongs is in contract for the second plan.

In contrast, when the plan associated with the identified tenant ID is the first plan in the tenant management information 24C, the image processing device 25A decides that the tenant to which the manager belongs is not in contract for the second plan.

Upon deciding that the tenant to which the manager belongs is in contract for the second plan (YES at step S 121), the image processing device 25A decides whether there is only one system-settable value, not yet designated in the file format designation screen 300, and starting with the character string inputted to the textbox 302, among the system-settable values for the file format item, included in the system-settable value information 24G (step S122).

Upon deciding that the tenant to which the manager belongs is not in contract for the second plan (NO at step S 121), the image processing device 25A decides whether there is only one system-settable value, not yet designated in the file format designation screen 300, and starting with the character string inputted to the textbox 302, among the PDF, TIFF, and JPEG format in the system-settable values for the file format item, included in the system-settable value information 24G (step S123).

Upon deciding that there is only one system-settable value, not yet designated in the file format designation screen 300, and starting with the character string inputted to the textbox 302, among the system-settable values for the file format item, included in the system-settable value information 24G (YES at step S122), or that there is only one system-settable value, not yet designated in the file format designation screen 300, and starting with the character string inputted to the textbox 302, among the PDF, TIFF, and JPEG format in the system-settable values for the file format item, included in the system-settable value information 24G (YES at step S123), the image processing device 25A automatically inputs, to the textbox 302, the system-settable value not yet designated in the file format designation screen 300, and starting with the character string inputted to the textbox 302, among the system-settable values for the file format item, included in the system-settable value information 24G (step S124).

For example, in the case where the Word format has not yet been designated in the file format designation screen 300, when a character string "W" is inputted to the textbox 302, the image processing device 25A automatically inputs "Word format" to the textbox 302.

Here, in the case of deciding that there is only one system-settable value, not yet designated in the file format designation screen 300, and starting with the character string inputted to the textbox 302, among the PDF, TIFF, and JPEG format in the system-settable values for the file format item, included in the system-settable value information 24G (YES at step S123), the image processing device 25A automatically inputs the system-settable value not yet designated in the file format designation screen 300, and starting with the character string inputted to the textbox 302, among the PDF, TIFF, and JPEG format, in the textbox 302.

Upon deciding at step S122 that there are two or more system-settable values, not yet designated in the file format designation screen 300, and starting with the character string inputted to the textbox 302, among the system-settable values for the file format item, included in the system-settable value information 24G, or that there is no such system-settable value (step NO at S 122), deciding that there are two or more system-settable values, not yet designated in the file format designation screen 300, and starting with the character string inputted to the textbox 302, among the PDF, TIFF, and JPEG format in the system-settable values for the file format item, included in the system-settable value information 24G, or that there is no such system-settable value (NO at step S123), or finishing the operation of step S124, the image processing device 25A finishes the operation specified in Fig. 13.

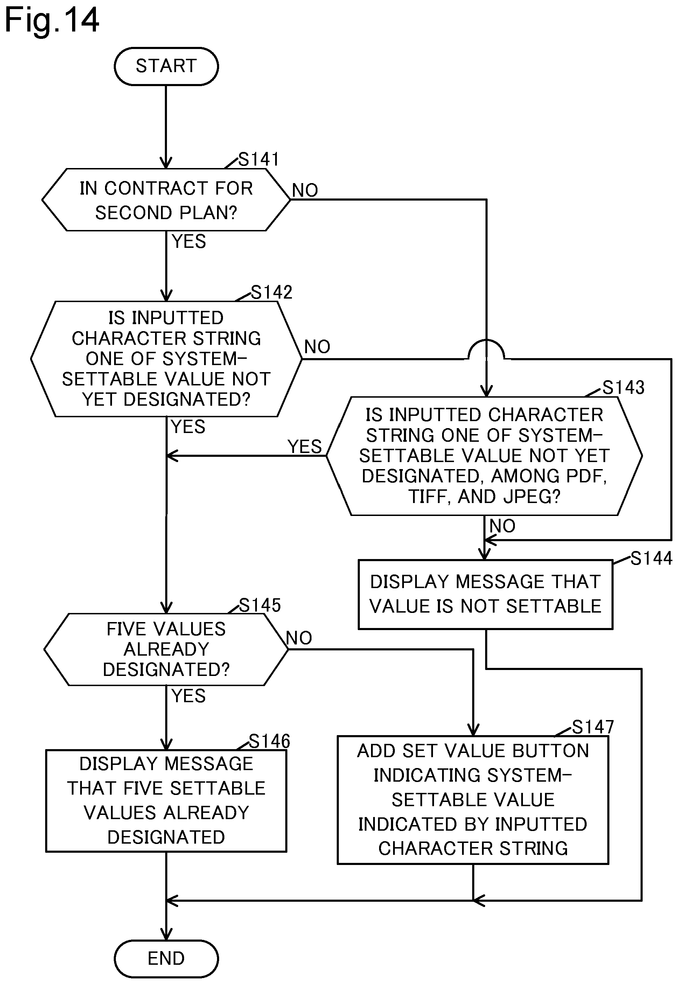

Fig. 14 is a flowchart showing an operation of the image processing system 20, performed when designation of the system-settable value according to the character string inputted in the textbox 302 is instructed.

For example, the manager can instruct to designate the system-settable value that accords with the character string inputted to the textbox 302, by pressing the return key with the cursor located in the textbox 302.

As shown in Fig. 14, the image processing device 25A decides, similarly to step S121 (see Fig. 13), whether the tenant to which the manager belongs is in contract for the second plan (step S141).

Upon deciding that the tenant to which the manager belongs is in contract for the second plan (YES at step S 141), the image processing device 25A decides whether the character string inputted to the textbox 302 is one of the system-settable values not yet designated in the file format designation screen 300, among the system-settable values for the file format item, included in the system-settable value information 24G (step S142).

In contrast, upon deciding that the tenant to which the manager belongs is not in contract for the second plan (NO at step S141), the image processing device 25A decides whether the character string inputted to the textbox 302 is one of the system-settable values not yet designated in the file format designation screen 300, among the PDF, TIFF, and JPEG format in the system-settable values for the file format item, included in the system-settable value information 24G (step S143).

Upon deciding that the character string inputted to the textbox 302 is not one of the system-settable values not yet designated in the file format designation screen 300, among the system-settable values for the file format item, included in the system-settable value information 24G (NO at step S 142), or deciding that the character string inputted to the textbox 302 is not one of the system-settable values not yet designated in the file format designation screen 300, among the PDF, TIFF, and JPEG format in the system-settable values for the file format item, included in the system-settable value information 24G (NO at step S 143), the image processing device 25A causes the display device 32 of the manager terminal device 30 to display a message to the effect that there is not settable value, through the web browser 35A of the manager terminal device 30 (step S 144), and finishes the operation specified in Fig. 14.

In contrast, upon deciding that the character string inputted to the textbox 302 is one of the system-settable values not yet designated in the file format designation screen 300, among the system-settable values for the file format item, included in the system-settable value information 24G (YES at step S142), or deciding that the character string inputted to the textbox 302 is one of the system-settable values not yet designated in the file format designation screen 300, among the PDF, TIFF, and JPEG format in the system-settable values for the file format item, included in the system-settable value information 24G (YES at step S143), the image processing device 25A decides whether there are five system-settable values that have already been designated in the file format designation screen 300 (step S145).

Upon deciding that there are five system-settable values that have already been designated in the file format designation screen 300 (YES at step S145), the image processing device 25A causes the display device 32 of the manager terminal device 30 to display a message to the effect that five settable values have already been designated, through the web browser 35A of the manager terminal device 30 (step S146), and finishes the operation specified in Fig. 14.

Upon deciding that there are less than five system-settable values that have already been designated in the file format designation screen 300 (NO at step S145), the image processing device 25A adds a button indicating the value designated in the file format designation screen 300 (hereinafter, "set value button"), to the file format designation screen 300, according to the system-settable value indicated by character string inputted to the textbox 302 (step S147).

When adding the set value button to the file format designation screen 300 at step S147, the image processing device 25A puts the set value button at the position forward of the textbox 302 in the file format designation screen 300, if there is no other set value button in the file format designation screen 300.

In the case where one or more other set value buttons are already present in the file format designation screen 300, when the image processing device 25A is about to add the set value button to the file format designation screen 300 at step S147, the image processing device 25A puts the set value button at the position rearward of all the other set value buttons, and forward of the textbox 302 in the file format designation screen 300.

The positional relation of forward and rearward about the textbox 302 and the set value button in the file format designation screen 300 is defined such that the upper position in the up-down direction in the file format designation screen 300 corresponds to the forward position, and when the buttons are at the same level in the up-down direction in the file format designation screen 300, the left side of the left-right direction in the file format designation screen 300 corresponds to the forward position.

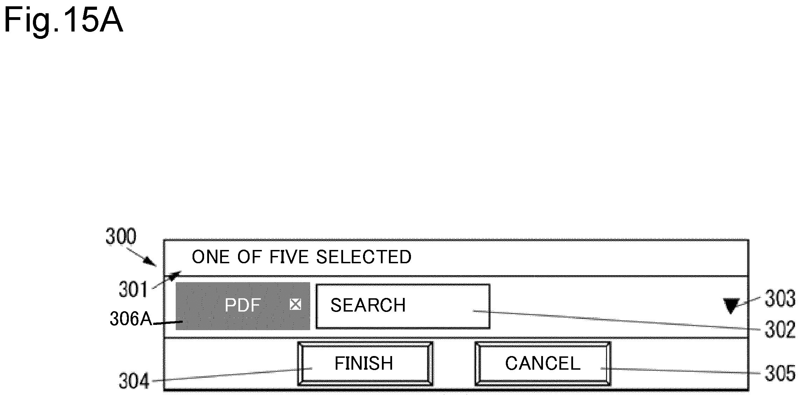

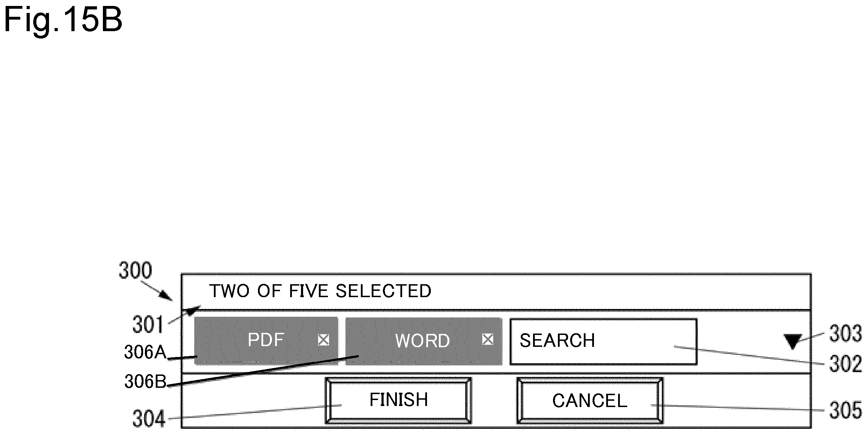

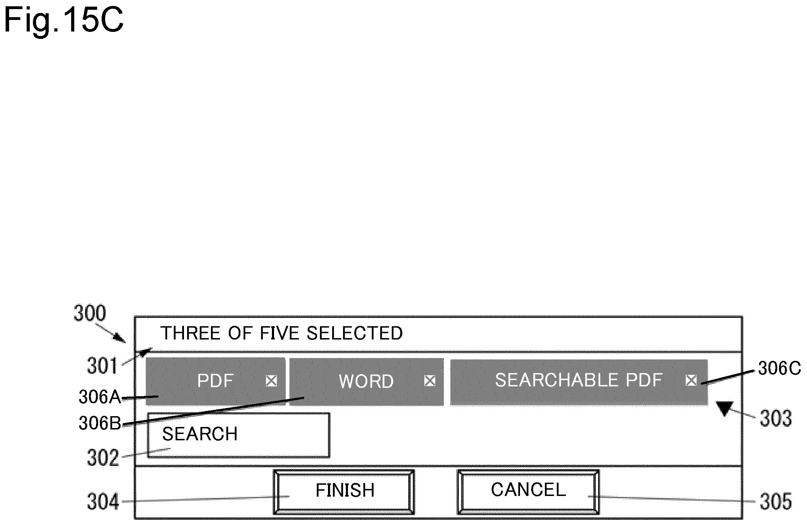

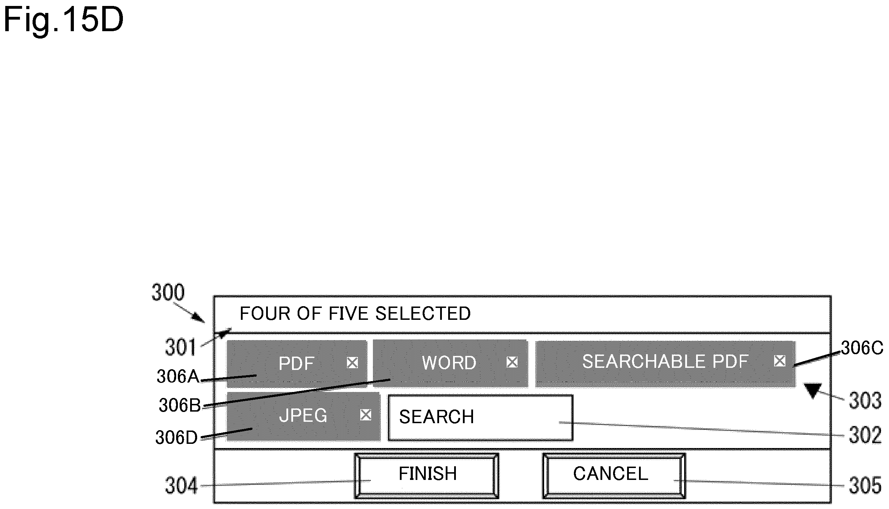

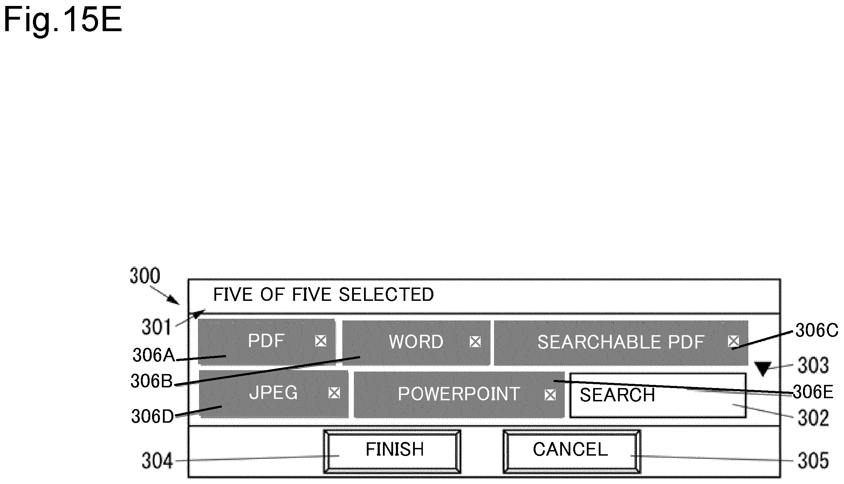

Fig. 15A presents an example of the file format designation screen 300, with one set value button displayed therein. Fig. 15B presents an example of the file format designation screen 300, with two set value buttons displayed therein. Fig. 15C presents an example of the file format designation screen 300, with three set value buttons displayed therein. Fig. 15D presents an example of the file format designation screen 300, with four set value buttons displayed therein. Fig. 15E presents an example of the file format designation screen 300, with five set value buttons displayed therein.

In the file format designation screen 300 shown in Fig. 15A, a set value button 306A indicating the PDF is displayed. In the file format designation screen 300 shown in Fig. 15B, a set value button 306B indicating the Word format is displayed, at the rear of the set value button 306A indicating the PDF. In the file format designation screen 300 shown in Fig. 15C, a set value button 306C indicating the Searchable PDF is displayed, at the rear of the set value button 306A and the set value button 306B.

In the file format designation screen 300 shown in Fig. 15D, a set value button 306D indicating the JPEG format is displayed, at the rear of the set value button 306A, the set value button 306B, and the set value button 306C. In the file format designation screen 300 shown in Fig. 15E, a set value button 306E indicating the PowerPoint format is displayed, at the rear of the set value button 306D indicating the JPEG format.

As shown in Fig. 14, upon finishing the operation of step S147, the image processing device 25A finishes the operation specified in Fig. 14.

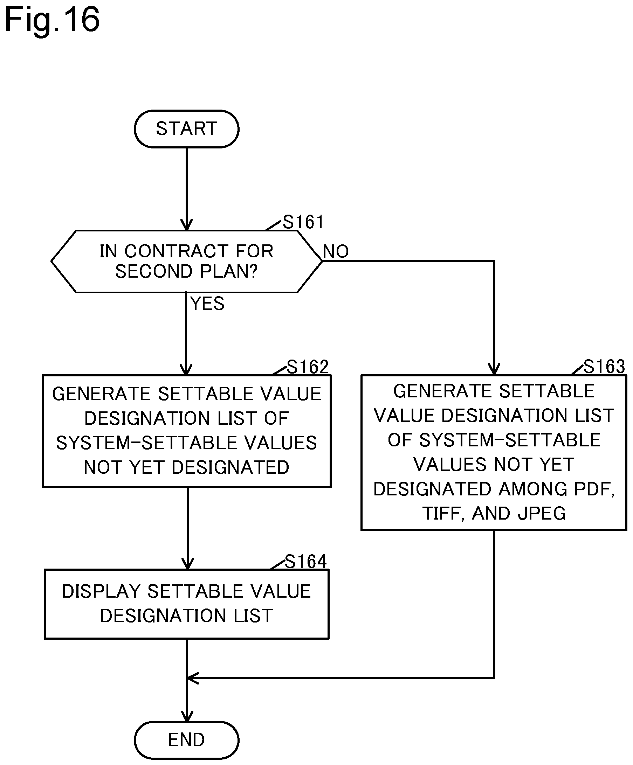

Fig. 16 is a flowchart showing an operation of the image processing system 20, performed when the list display button 303 in the file format designation screen 300 is pressed.

As shown in Fig. 16, the image processing device 25A decides, similarly to step S121 (see Fig. 13), whether the tenant to which the manager belongs is in contract for the second plan (step S161).

Upon deciding that the tenant to which the manager belongs is in contract for the second plan (YES at step S 161), the image processing device 25A generates the settable value designation list including the system-settable values not yet designated in the file format designation screen 300, among the system-settable values for the file format item, included in the system-settable value information 24G (step S162).

In contrast, upon deciding that the tenant to which the manager belongs is not in contract for the second plan (NO at step S161), the image processing device 25A generates the settable value designation list including the system-settable values not yet designated in the file format designation screen 300, among the PDF, TIFF, and JPEG format in the system-settable values for the file format item, included in the system-settable value information 24G (step S163).

Upon finishing the operation of step S162 or step S163, the image processing device 25A causes the display device 32 of the manager terminal device 30 to display the settable value designation list generated at step S162 or step S163, through the web browser 35A of the manager terminal device 30 (step S164), and finishes the operation specified in Fig. 16.

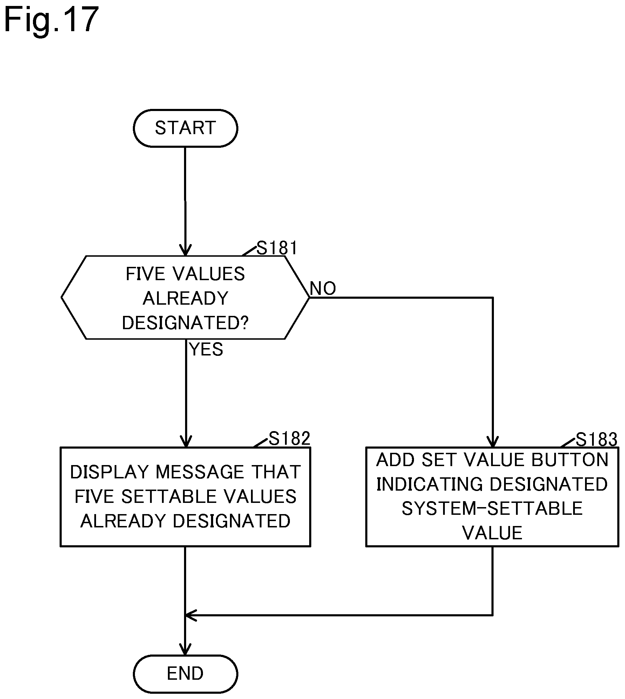

Fig. 17 is a flowchart showing an operation of the image processing system 20, performed when designation of the system-settable value displayed in the settable value designation list is instructed.

The manager can designate one of the system-settable values displayed in the settable value designation list. When one of the system-settable values displayed in the settable value designation list is designated, the image processing device 25A performs the operation specified in Fig. 17.

As shown in Fig. 17, the image processing device 25A decides whether five system-settable values have already been designated, in the file format designation screen 300 (step S181).

Upon deciding that five system-settable values have already been designated, in the file format designation screen 300 (YES at step S181), the image processing device 25A causes the display device 32 of the manager terminal device 30 to display a message to the effect that five settable values have already been designated, through the web browser 35A of the manager terminal device 30 (step S182), and finishes the operation specified in Fig. 17.

In contrast, upon deciding that five values have not yet been designated in the file format designation screen 300 (NO at step S181), the image processing device 25A adds a set value button corresponding to the system-settable value designated by the manager, among the values displayed in the settable value designation list, to the file format designation screen 300 (step S183).

When adding the set value button to the file format designation screen 300 at step S183, the image processing device 25A puts the set value button at the position forward of the textbox 302 in the file format designation screen 300, if there is no other set value button in the file format designation screen 300.

In the case where one or more other set value buttons are already present in the file format designation screen 300, when the image processing device 25A is about to add the set value button to the file format designation screen 300 at step S183, the image processing device 25A puts the set value button at the rear of all the other set value buttons, and forward of the textbox 302, in the file format designation screen 300.

Upon finishing the operation of step S183, the image processing device 25A finishes the operation specified in Fig. 17.

The manager can press one of the set value buttons displayed in the file format designation screen 300. When one of the set value buttons in the file format designation screen 300 is pressed, the image processing device 25A deletes the set value button pressed by the manager, from the file format designation screen 300.

Referring again to Fig. 11, after finishing the operation of step S101, the image processing device 25A decides whether the finish button 304 has been pressed (step S102). Upon deciding that the finish button 304 has not been pressed (NO at step S102), the image processing device 25A decides whether the cancel button 305 has been pressed (step S103).

Upon deciding that the cancel button 305 has been pressed (YES at step S103), the image processing device 25A erases the display of the file format designation screen 300 on the display device 32 of the manager terminal device 30, realized through the web browser 35A of the manager terminal device 30 (step S104), and finishes the operation specified in Fig. 11.

Upon deciding that the cancel button 305 has not been pressed (NO at step S103), the image processing device 25A executes the operation of step S102.

Upon deciding that the finish button 304 has pressed (YES at step S102), the image processing device 25A erases the display of the file format designation screen 300 on the display device 32 of the manager terminal device 30, realized through the web browser 35A of the manager terminal device 30 (step S105).

After finishing the operation of step S105, the image processing device 25A decides whether the set value button was included in the file format designation screen 300, when the finish button 304 was pressed (step S106).

Upon deciding that the set value button was not included in the file format designation screen 300, when the finish button 304 was pressed (NO at step S106), the image processing device 25A decides whether there is a user-settable value, associated with the combination of the workflow ID of the workflow to be executed and the item ID of the file format item, in the user-settable value information 24H (step S107).

Upon deciding that there is a user-settable value, associated with the combination of the workflow ID of the workflow to be executed and the item ID of the file format item, in the user-settable value information 24H (YES at step S107), the image processing device 25A deletes the user-settable value associated with the combination of the workflow ID of the workflow to be executed and the item ID of the file format item, from the user-settable value information 24H (step S108).

Upon deciding that there is no user-settable value, associated with the combination of the workflow ID of the workflow to be executed and the item ID of the file format item, in the user-settable value information 24H (NO at step S107), or finishing the operation of step S108, the image processing device 25A finishes the operation specified in Fig. 11.

In contrast, upon deciding that the set value button was included in the file format designation screen 300, when the finish button 304 was pressed (YES at step S106), the image processing device 25A decides whether there is a user-settable value, associated with the combination of the workflow ID of the workflow to be executed and the item ID of the file format item, in the user-settable value information 24H (step S109).

Upon deciding that there is a user-settable value, associated with the combination of the workflow ID of the workflow to be executed and the item ID of the file format item, in the user-settable value information 24H (YES at step S109), the image processing device 25A updates, in the user-settable value information 24H, the user-settable value and the display order, associated with the combination of the workflow ID of the workflow to be executed and the item ID of the file format item, in the user-settable value information 24H, to the value and the display order corresponding to the set value button that was included in the file format designation screen 300, when the finish button 304 was pressed (step S110).

The image processing device 25A advances the display order of the value, corresponding to the set value button that was located on the forward side in the file format designation screen 300, when the finish button 304 was pressed. For example, the image processing device 25A assigns the display order "1", to the value corresponding to the set value button that was located at the forwardmost position in the file format designation screen 300, when the finish button 304 was pressed.

Upon deciding that there is no user-settable value, associated with the combination of the workflow ID of the workflow to be executed and the item ID of the file format item, in the user-settable value information 24H (NO at step S109), the image processing device 25A adds the value and the display order, corresponding to the set value button included in the file format designation screen 300 when the finish button 304 was pressed, to the user-settable value information 24H, as the user-settable value and the display order associated with the combination of the workflow ID of the workflow to be executed and the item ID of the file format item (step S111).

After finishing the operation of step S110 or step S111, the image processing device 25A finishes the operation specified in Fig. 11.

In the file format designation screen 300 thus far described, up to five user-settable values can be designated, for the file format item. However, the number of pieces of the user-settable values that can be designated for the file format item may be determined as desired.

Hereunder, an operation of the system 10, performed when the image processing system 20 executes the workflow, will be described. First, the operation of the system 10 performed when the image reading apparatus 40 displays the available workflow will be described.

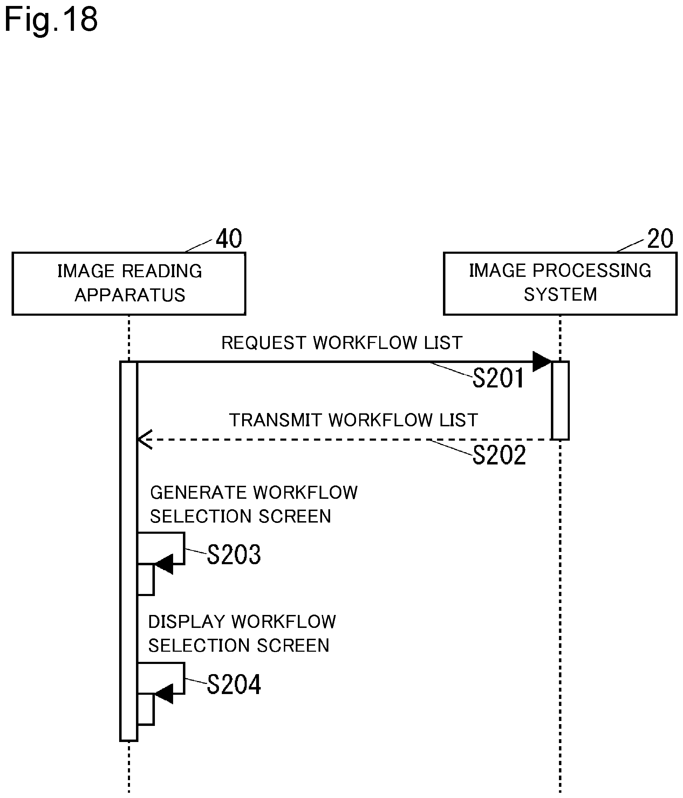

Fig. 18 is a sequence chart showing the operation of the system 10, performed when the available workflow is displayed by the image reading apparatus 40.

The user, such as a general user, can make access to the image processing system 20 from the image reading apparatus 40, and log in to the image processing system 20 using the user ID and the password. When the combination of the user ID and the password of the user, inputted from the image reading apparatus 40, is included in the user management information 24D, the image processing device 25A of the image processing system 20 permits the user to log in.

Upon logging in to the image processing system 20 from the image reading apparatus 40, the user can input an instruction to display the workflows that are available (hereinafter, "workflow display instruction"), to the image reading apparatus 40 from the operation device 41 of the image reading apparatus 40.

When the workflow display instruction is inputted, the workflow utilization device 47A of the image reading apparatus 40 requests the image processing system 20 to provide a list of the available workflows (hereinafter, "workflow list"), as shown in Fig. 18 (step S201).

Upon receipt of the request of step S201, the image processing device 25A of the image processing system 20 identifies the tenant ID associated with the user ID of the user who has logged in from the image reading apparatus 40, on the basis of the user management information 24D. The image processing device 25A generates the workflow list including the workflow ID and the workflow name of all the workflows associated with the tenant ID identified, in the workflow management information 24F, and transmits the workflow list to the image reading apparatus 40 (step S202).

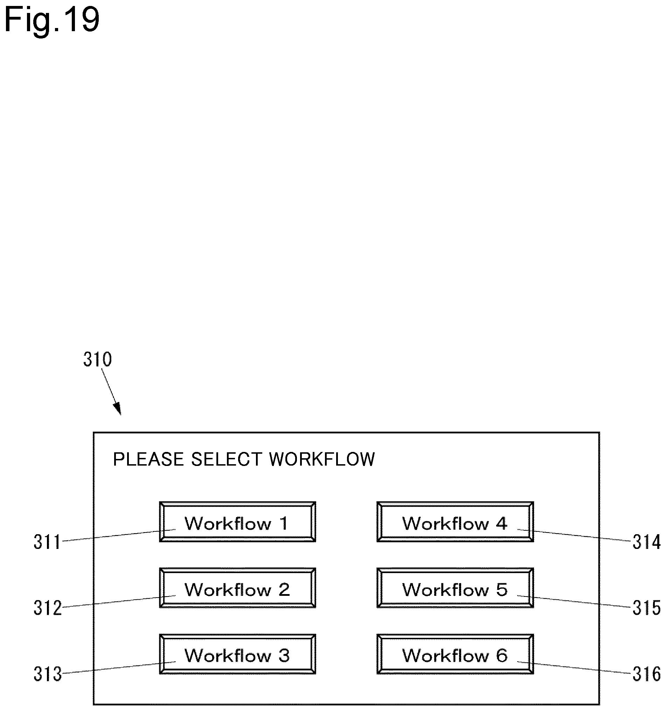

Upon receipt of the workflow list, transmitted at step S202 from the image processing system 20, the workflow utilization device 47A of the image reading apparatus 40 generates a workflow selection screen 310 (see Fig. 19) for selecting the workflow, on the basis of the workflow list received from the image processing system 20 (step S203).

After finishing the operation of step S203, the workflow utilization device 47A causes the display device 42 to display the workflow selection screen 310 generated at step S203 (step S204).

Fig. 19 presents an example of the workflow selection screen 310, displayed at step S204.

As shown in Fig. 19, the workflow selection screen 310 includes workflow buttons 311 to 316, which are widgets respectively corresponding to the workflows included in the workflow list received from the image processing system 20. The workflow buttons 311 to 316 indicate the respective names of the workflows included in the workflow list received from the image processing system 20.

The workflow selection screen 310 shown in Fig. 19 includes six workflow buttons. However, the workflow selection screen 310 is configured to display the same number of pieces of workflow buttons as the number of pieces of the workflows included in the workflow list received from the image processing system 20, and therefore the workflow selection screen 310 may display a different number of pieces of workflow buttons.

Hereunder, an operation of the system 10, performed when the workflow button is pressed in the workflow selection screen 310, will be described.

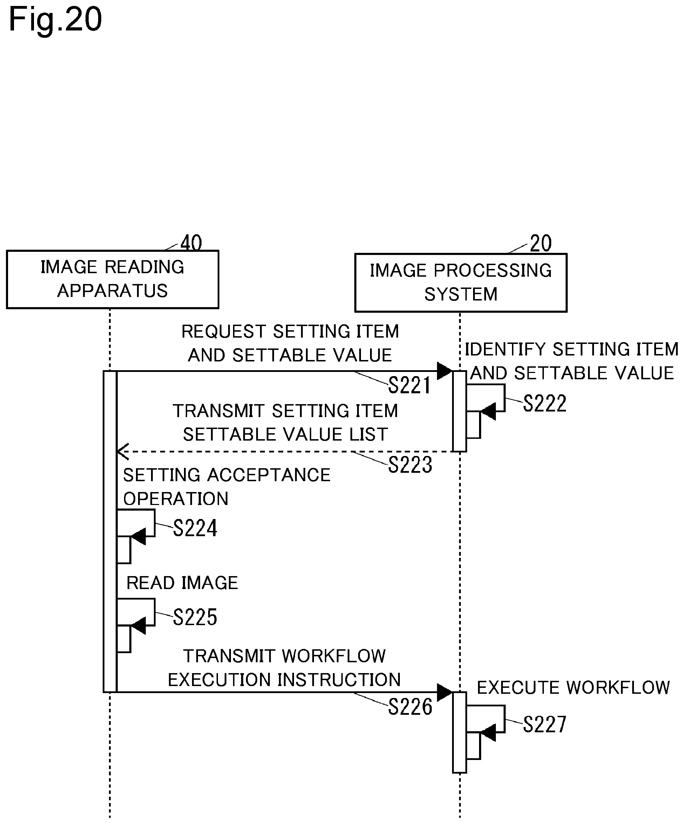

Fig. 20 is a sequence chart showing the operation of the system 10, performed when the workflow button in the workflow selection screen 310 is pressed.

The user can input, by pressing the workflow button in the workflow selection screen 310, the instruction to utilize the workflow corresponding to the workflow button (hereinafter, "workflow utilization instruction"), to the image reading apparatus 40.

When the workflow utilization instruction is inputted, the workflow utilization device 47A of the image reading apparatus 40 requests the image processing system 20 to provide the setting item related to the workflow designated by the workflow utilization instruction, and settable values for the setting item, as shown in Fig. 20 (step S221). The workflow utilization device 47A includes the workflow ID of the workflow designated by the workflow utilization instruction, in the request of step S221.

Upon receipt of the request of step S221, the image processing device 25A of the image processing system 20 identifies the setting item related to the workflow relevant to the request of step S221, and the values settable for the setting item, on the basis of the workflow management information 24F, the system-settable value information 24G, and the user-settable value information 24H (step S222).

As an example of the operation to identify the settable value for the setting item at step S222, an operation to identify the settable value for the file format item will be described hereunder.

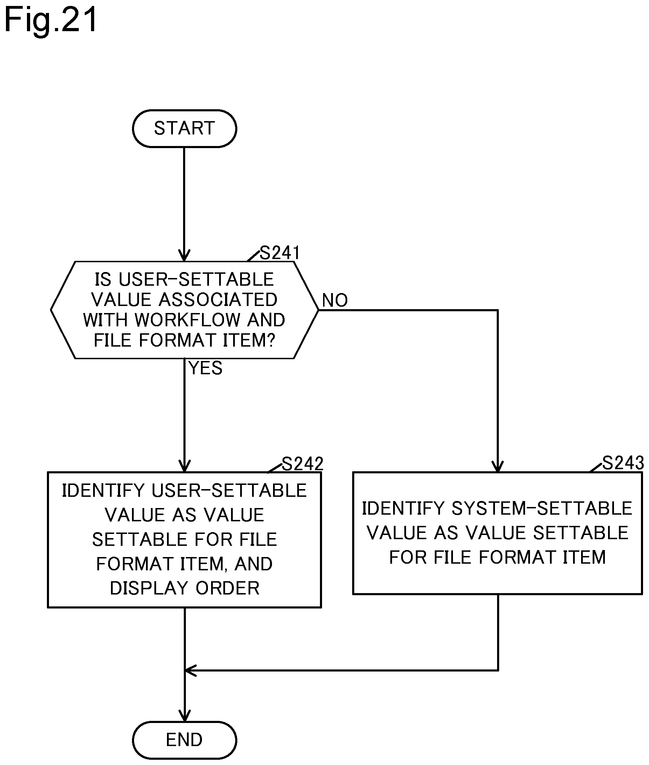

Fig. 21 is a flowchart showing an operation of the image processing system 20, performed when identifying the settable value for the file format item.

As shown in Fig. 21, image processing device 25A of the image processing system 20 decides whether the user-settable value is associated with the combination of the workflow ID of the workflow relevant to the request of step S221, and the item ID of the file format item, in the user-settable value information 24H (step S241).

Upon deciding that the user-settable value is associated with the combination of the workflow ID of the workflow relevant to the request of step S221, and the item ID of the file format item, in the user-settable value information 24H (YES at step S241), the image processing device 25A identifies, as the settable value for the file format item, the user-settable value associated with the combination of the workflow ID of the workflow relevant to the request of step S221, and the item ID of the file format item, in the user-settable value information 24H, along with the display order associated with the combination of the workflow ID of the workflow relevant to the request of step S221, and the item ID of the file format item, in the user-settable value information 24H (step S242), and finishes the operation specified in Fig. 21.

On the other hand, upon deciding that the user-settable value is not associated with the combination of the workflow ID of the workflow relevant to the request of step S221, and the item ID of the file format item, in the user-settable value information 24H (NO at step S241), the image processing device 25A identifies the system-settable value associated with the item ID of the file format item in the system-settable value information 24G, as the settable value for the file format item (step S243), and finishes the operation specified in Fig. 21.

Referring again to Fig. 20, after finishing the operation of step S222, the image processing device 25A generates a list of the setting item and the settable values, identified at step S222 (hereinafter, "setting item settable value list"), and transmits such list to the image reading apparatus 40 (step S223). When the display order of the settable value is identified at step S222, the image processing device 25A includes the identified display order, in the setting item settable value list.

Upon receipt of the setting item settable value list, transmitted from the image processing system 20 at step S223, the workflow utilization device 47A of the image reading apparatus 40 executes a setting acceptance operation, including accepting the setting of the value with respect to each of the setting items, according to the setting item settable value list received (step S224).

The workflow utilization device 47A sequentially displays, in the setting acceptance operation of step S224, a screen for accepting the setting of the value for the setting item (hereinafter, "setting screen"), with respect to each of the setting items, on the display device 42.

As an example of the operation to display the setting screen, an operation to display the setting screen for the file format item (hereinafter, "file format setting screen") will be described hereunder.

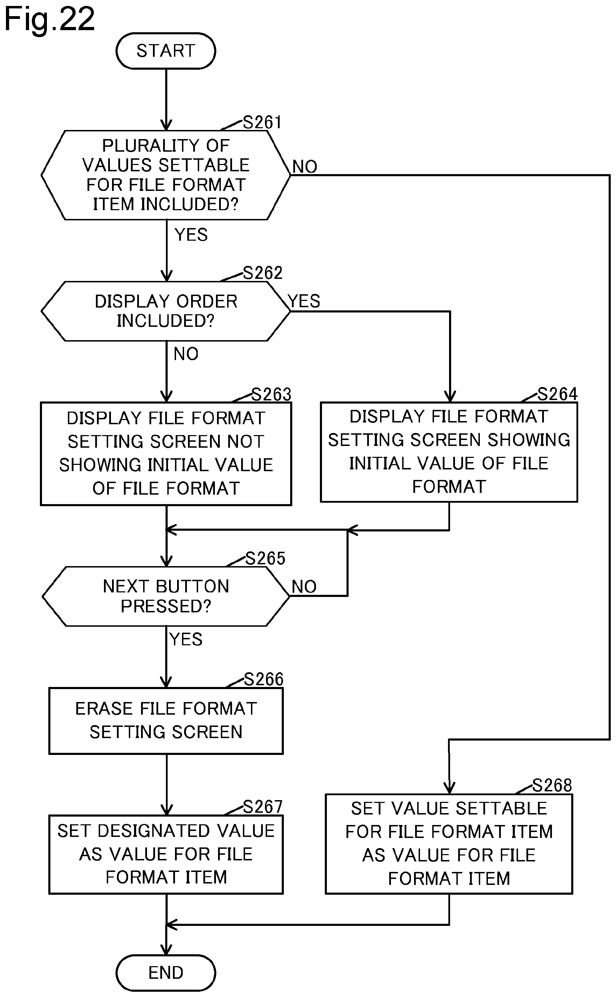

Fig. 22 is a flowchart showing an operation of the image processing system 20, performed when displaying the file format setting screen.

As shown in Fig. 22, the workflow utilization device 47A decides whether the setting item settable value list received from the image processing system 20 includes a plurality of settable values, for the file format item (step S261).

Upon deciding that the setting item settable value list includes a plurality of settable values, for the file format item (YES at step S261), the workflow utilization device 47A decides whether the setting item settable value list received from the image processing system 20 includes the display order of the settable values for the file format item (step S262).

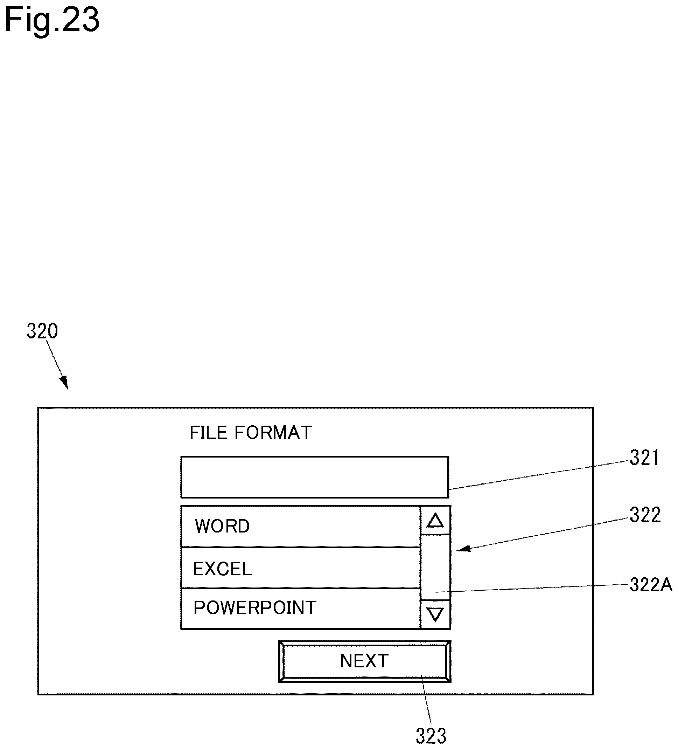

Upon deciding that the setting item settable value list does not include the display order of the settable values for the file format item (NO at step S262), the workflow utilization device 47A displays a file format setting screen 320 not showing the initial value of the file format (see Fig. 23), on the display device 42 (step S263).

Fig. 23 presents an example of the file format setting screen 320, not showing the initial value of the file format.

As shown in Fig. 23, the file format setting screen 320 includes a textbox 32, a list box 322, and a next button 323. The textbox 321 is a widget for indicating the designated value. The list box 322 is a widget for displaying the settable values and accepting the designation of the value. The next button 323 is a widget for proceeding to the next screen. The list box 322 includes a scroll bar 322A, to be used when all the prospective values are unable to be displayed at a time, in the list box 322.

In the initial state of the file format setting screen 320 shown in Fig. 23, the value is not yet designated in the list box 322, and therefore no value is shown in the textbox 321.

Since the list box 322 shown in Fig. 23 includes the scroll bar 322A, all the settable values for the file format item, included in the setting item settable value list received from the image processing system 20 can be displayed in the list box 322, by operating the scroll bar 322A. The display order of the values in the list box 322 shown in Fig. 23 corresponds to the order of the settable values for the file format item, included in the setting item settable value list received from the image processing system 20.

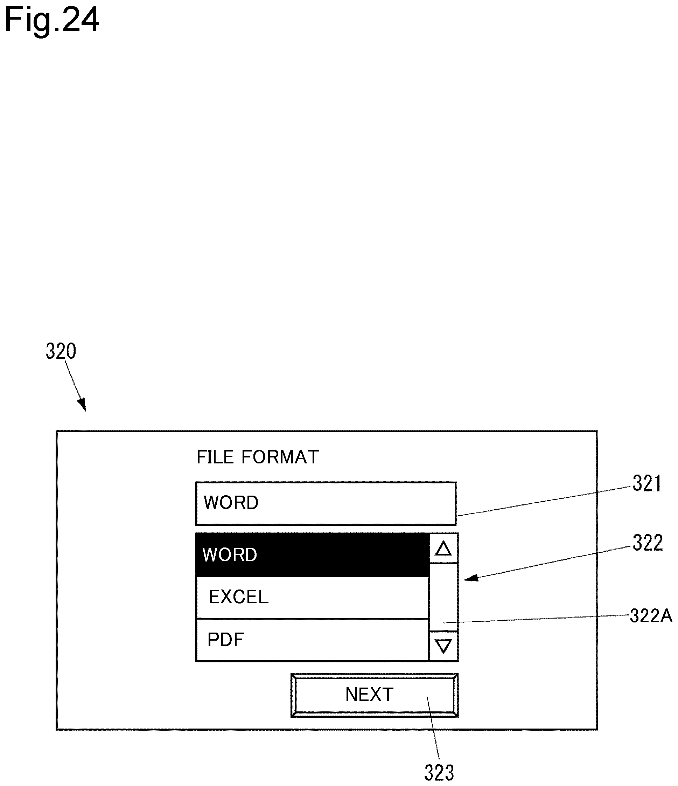

As shown in Fig. 22, upon deciding that the setting item settable value list includes the display order of the settable values for the file format item (YES at step S262), the workflow utilization device 47A displays the file format setting screen 320 showing the initial value of the file format (see Fig. 24), on the display device 42 (step S264).

Fig. 24 presents an example of the file format setting screen 320, showing the initial value of the file format. The layout of the file format setting screen 320 shown in Fig. 24 is the same as that of the file format setting screen 320 shown in Fig. 23.

In the initial state of the file format setting screen 320 shown in Fig. 24, the value corresponding to the display order "1" is designated in the list box 322, among the settable values for the file format item, included in the setting item settable value list received from the image processing system 20, and therefore the value designated in the list box 322 is shown in the textbox 321.

Since the list box 322 shown in Fig. 24 includes the scroll bar 322A, all the settable values for the file format item, included in the setting item settable value list received from the image processing system 20 can be displayed in the list box 322, by operating the scroll bar 322A. The display order of the values in the list box 322 shown in Fig. 24 is the same as the display order of the settable values for the file format item, included in the setting item settable value list received from the image processing system 20.

As shown in Fig. 22, after finishing the operation of step S263 or step S264, the workflow utilization device 47A repeatedly decides whether the next button 323 has been pressed, until deciding that the next button 323 has been pressed (NO at step S265).

Upon deciding that the next button 323 has been pressed (YES at step S265), the workflow utilization device 47A erases the display of the file format setting screen 320 on the display device 42 (step S266).

After finishing the operation of step S266, the workflow utilization device 47A adopts the value designated in the list box 322 at the time that the next button 323 has been pressed, as the value for the file format item (step S267), and finishes the operation specified in Fig. 22.

Upon deciding that the setting item settable value list does not include a plurality of settable values, in other words includes only one settable value, for the file format item (NO at step S261), the workflow utilization device 47A adopts the settable value for the file format item in the setting item settable value list, as the value to be set for the file format item, without displaying the file format setting screen on the display device 42 (step S268), and finishes the operation specified in Fig. 22.

Referring again to Fig. 20, after finishing the setting acceptance operation of step S224, the workflow utilization device 47A reads the image from the document, with the scanner 44 (step S225).

In the case where the setting items, for which the values were accepted in the setting acceptance operation of step S224, include a setting item necessary for the reading operation of the scanner 44, for example the image reading resolution, the workflow utilization device 47A reads the image of the document with the scanner 44, using the value accepted in the setting acceptance operation of step S224, for the setting item necessary for the reading operation of the scanner 44, among the setting items for which the values were accepted in the setting acceptance operation of step S224.

After finishing the operation of step S225, the workflow utilization device 47A transmits an instruction to execute the workflow designated by the workflow utilization instruction (hereinafter, "workflow execution instruction"), to the image processing system 20 (step S226). The workflow utilization device 47A includes the workflow ID of the workflow designated by the workflow utilization instruction, in the workflow execution instruction. The workflow utilization device 47A also includes the image read at step S225, in the workflow execution instruction.

In the case where the setting items, for which the values were accepted in the setting acceptance operation of step S224, include a setting item necessary for the image processing system 20 to execute the workflow, for example the file format item, the workflow utilization device 47A includes, in the workflow execution instruction, the combination of the item ID of the setting item necessary for the image processing system 20 to execute the workflow, among the setting items for which the values were accepted in the setting acceptance operation of step S224, and the value accepted in the setting acceptance operation of step S224.

Upon receipt of the workflow execution instruction transmitted from the image reading apparatus 40 at step S226, the image processing device 25A of the image processing system 20 executes the workflow according to the workflow execution instruction, using the image included in the workflow execution instruction received (step S227).

In the case where the workflow execution instruction includes the combination of the setting item and the corresponding value, when the image processing device 25A is about to execute the workflow according to the workflow execution instruction, the image processing device 25A executes the designated workflow, on the basis of such combination. For example, in the case where the workflow execution instruction includes the combination of the file format item and the corresponding value, when the image processing device 25A is about to execute the workflow according to the workflow execution instruction, the image processing device 25A generates the document in the file format defined by the corresponding value.

Now, the aforementioned existing information processing system has a drawback in that the prospective input items of the dependee are unable to be limited.

In addition, an image processing system is generally known that executes a workflow indicating a process including operations with respect to an image read by an image reading apparatus. However, the values that can be set by the image processing system, for the setting items related to the workflow, may include a value that is inappropriate for a specific workflow.

In contrast, in the image processing system 20 according to the foregoing embodiment, when the manager of the image processing system 20 designates the system-settable value, which may be set by the user of the image processing system 20 for the setting item, among the system-settable values that can be set in the image processing system 20 for the setting items related to the workflow (YES at step S106), the system-settable value designated by the manager is adopted as the user-settable value (step S109 to step S111). Such an arrangement minimizes the likelihood that an appropriate value is set by the user for the setting item related to the workflow.

When adopting each of a plurality of system-settable values designated by the manager as the user-settable value (step S109 to step S111), the image processing system 20 determines the display order of the user-settable value, to be set by the user for the setting item related to the workflow, according to the instruction of the manager (step S110 or step S111). Therefore, the user can be made aware of the order of importance, conceived by the manager, with respect to each of the plurality of user-settable values, on the basis of the display order of the user-settable value. Such an arrangement facilitates the user to set the value for the setting item related to the workflow.

When the value is to be set by the user of the image processing system 20 for the setting item related to the workflow, the image reading apparatus 40 adopts the user-settable value located at the top of the display order determined by the image processing system 20, as the initial value to be utilized by the user when the user sets the value for the setting item (YES at step S262, and step S264). Such an arrangement leads to improved work efficiency, when the user sets the value for the setting item related to the workflow.

### Second Embodiment

First, a configuration of the system according to a second embodiment of the invention will be described.

The configuration of the system according to the second embodiment is similar to that of the system 10 according to the first embodiment (see Fig. 1), except for the aspects described hereunder. Accordingly, the elements of the system according to the second embodiment, which are the same as those of the system 10, are given the same numeral, and detailed description of such elements will not be repeated.

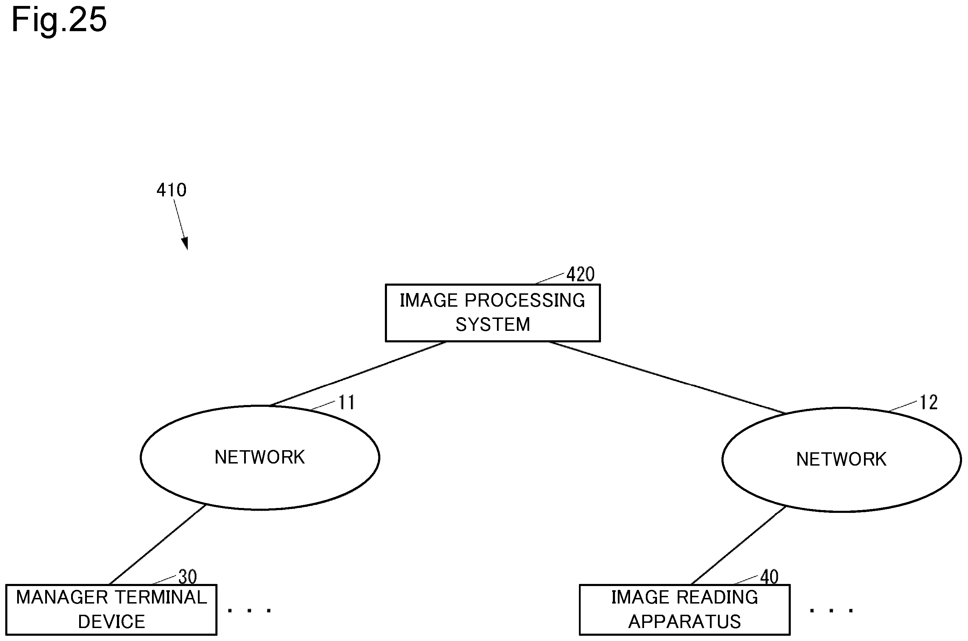

Fig. 25 is a block diagram showing a configuration of the system 410 according to the second embodiment.

As shown in Fig. 25, in the system 410, an image processing system 420 that executes specific processings with respect to the image read by the image reading apparatus 40, is substituted for the image processing system 20 (see Fig. 1) of the system 10 (see Fig. 1). The image processing system 420 may be constituted of a single computer such as a PC, or a plurality of computers. The device management system 420 may be configured as a cloud server.

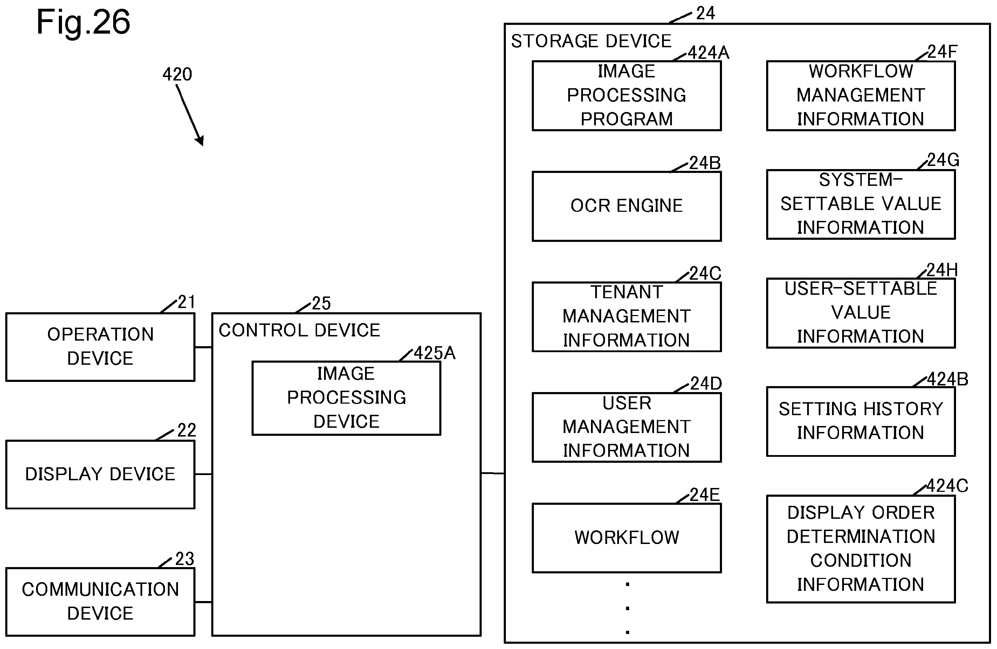

Fig. 26 is a block diagram showing a configuration of the image processing system 420, constituted of a single computer.

As shown in Fig. 26, in the image processing system 420, the storage device 24 can store therein an image processing program 424A, for executing the specific processing with respect to the image read by the image reading apparatus 40, in place of the image processing program 24A, and also a setting history information 424B, and a display order determination condition information 424C, which are not provided in the image processing system 20.

The setting history information 424B indicates the setting history of the values set by the user for the setting item (hereinafter, "setting history"). The display order determination condition information 424C indicates the condition, according to which the display order of the settable values for the setting item is determined (hereinafter, "display order determination condition"), on the basis of the setting history.

The control device 25 realizes an image processing device 425A that executes a specific processing on the image read by the image reading apparatus 40, by executing the image processing program 424A.

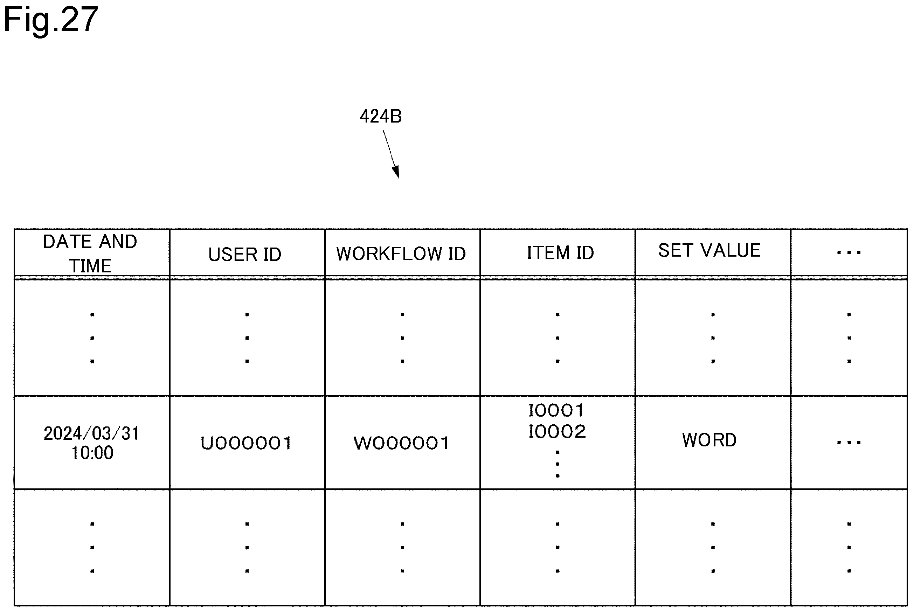

Fig. 27 presents an example of setting history information 424B. As shown in Fig. 27, the setting history information 424B includes the date and time that the value was set for the setting item, the user ID of the user who set the value for the setting item, the workflow ID of the workflow for which the value was set for the setting item, the item ID of the setting item for which the value was set, and the value set for the setting item, in association with each other, with respect to each of the value setting operations. Fig. 27 shows a part of the content of the setting history information 424B.

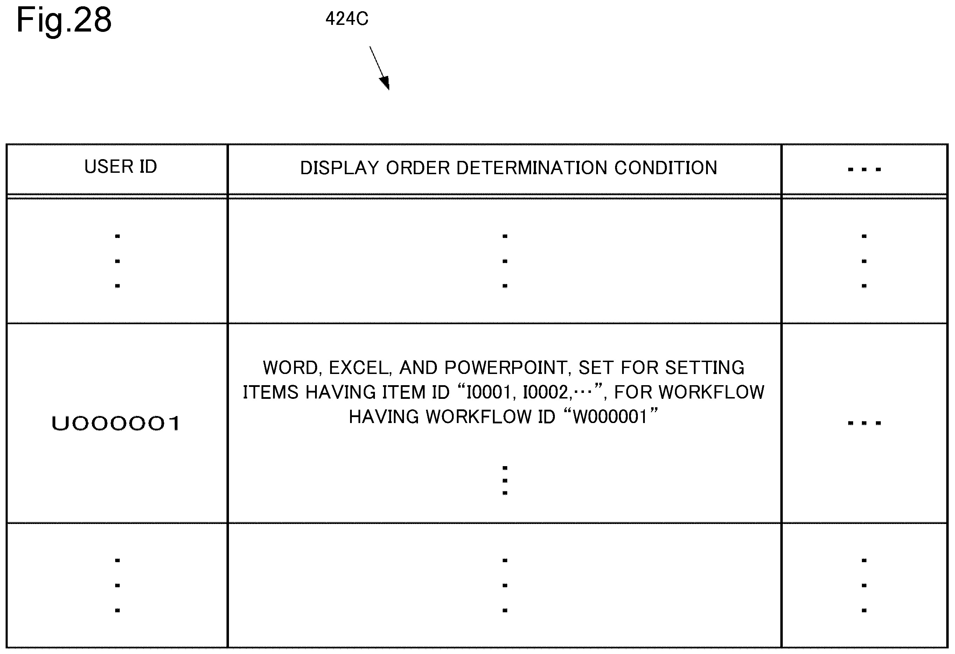

Fig. 28 presents an example of the display order determination condition information 424C. As shown in Fig. 28, the display order determination condition information 424C includes the user ID of the user relevant to the display order determination condition, and the display order determination condition, in association with each other, with respect to each of the users. Fig. 28 shows a part of the content of the display order determination condition information 424C.

The display order determination condition is represented by the user-settable value, for which the display order of the values settable for the setting item is determined on the basis of the setting history. The display order determination condition may include a specific user-settable value for a specific setting item related to a specific workflow, all the user-settable values for a specific setting item related to a specific workflow, all the user-settable values for all the setting items related to a specific workflow, a specific user-settable value for a specific setting item related to all the workflows, all the user-settable values for a specific setting item related to all the workflows, or all the user-settable values for all the setting items related to all the workflows.

Hereunder, an operation of the system 410 will be described.

The operation of the system 410 is similar to that of the system 10 (see Fig. 1) according to the first embodiment, except for the aspects described below. Accordingly, detailed description of the operation of the system 410, similar to that of the system 10, will not be repeated.

First, an operation of the image processing system 420, performed to update the setting history information 424B, will be described.

The image processing device 425A of the image processing system 420 updates the setting history information 424B on the basis of the information included in the workflow execution instruction received from the image reading apparatus 40, each time the image processing system 420 executes the workflow at step S227 (see Fig. 20).

Here, the workflow utilization device 47A of the image reading apparatus 40 includes the combination of the item ID of all the setting items, for which the values were accepted in the setting acceptance operation of step S224 (see Fig. 20), and the value for the setting item accepted in the setting acceptance operation of step S224, in the workflow execution instruction transmitted to the image processing system 420 at step S226 (see Fig. 20).

The image processing device 425A adopts the date and time that the workflow has been executed, as the date and time that the value has been set for the setting item, in the setting history information 424B.

Hereunder, an operation of the image processing system 420, performed to register the display order determination condition, will be described.

The manager who has logged in to the image processing system 420 from the manager terminal device 30 can instruct the image processing system 420 to register the display order determination condition, from the web browser 35A of the manager terminal device 30, through the website provided by the image processing system 420. When the registration of the display order determination condition is instructed, the image processing device 425A of the image processing system 420 registers the display order determination condition, the registration of which has been instructed, in the display order determination condition information 424C.

The image processing device 425A of the image processing system 420 can also edit or delete a specific display order determination condition in the display order determination condition information 424C, according to the instruction of the manager, like the registration of the display order determination condition.

Hereunder, the process of identifying the value settable for the setting item at step S222 (see Fig. 20) will be described.

The image processing system 420 is different from the image processing system 20, in the process of identifying the value settable for the setting item at step S222.

As an example of the process of identifying the value settable for the setting item at step S222, a process of identifying the value settable for the file format item will be described.

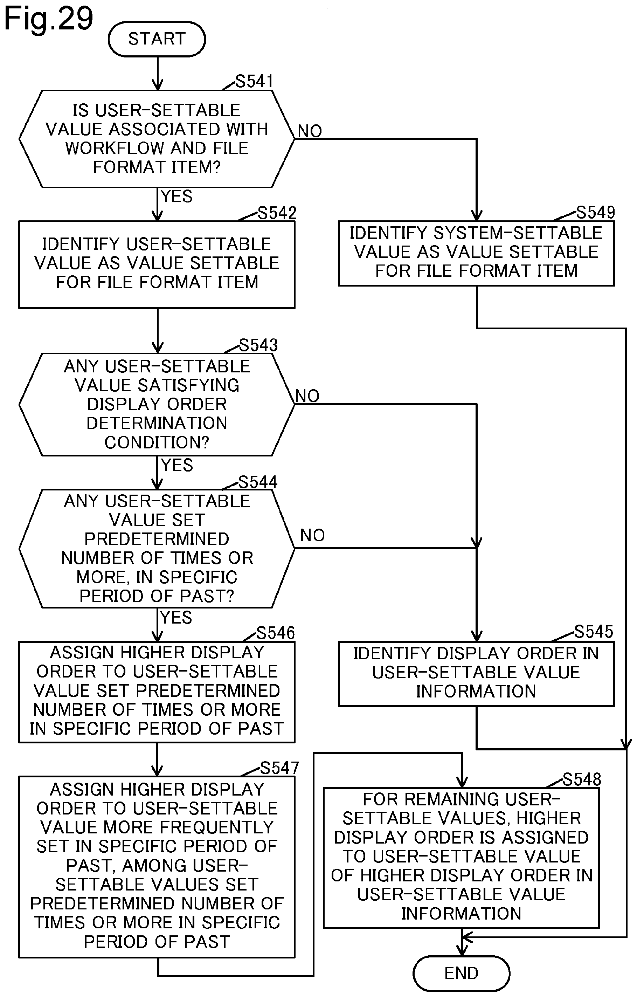

Fig. 29 is a flowchart showing the operation of the image processing system 420, performed to identify the settable value for the file format item.

As shown in Fig. 29, the image processing device 425A of the image processing system 420 executes step S541, which is similar to step S241 (see Fig. 21).

Upon deciding that the user-settable value is associated with the combination of the workflow ID of the workflow relevant to the request of step S221 (see Fig. 20), and the item ID of the file format item, in the user-settable value information 24H (YES at step S541), the image processing device 425A identifies, as the settable value for the file format item, the user-settable value associated with the combination of the workflow ID of the workflow relevant to the request of step S221, and the item ID of the file format item, in the user-settable value information 24H (step S542).

After finishing the operation of step S542, the image processing device 425A decides whether the user-settable values identified at step S542 include user-settable values that satisfy the display order determination condition in the display order determination condition information 424C (step S543).

Upon deciding that the user-settable values identified at step S542 include the user-settable values that satisfy the display order determination condition in the display order determination condition information 424C (YES at step S543), the image processing device 425A decides whether the user-settable values, identified at step S542, and which satisfy the display order determination condition in the display order determination condition information 424C include user-settable values that were set a predetermined number of times or more, in a specific period in the past (step S544).

Here, the image processing device 425A identifies the number of times that the user-settable value was set in the specific period in the past, on the basis of the history associated with the combination of the user ID of the user who has logged in to the image processing system 420 from the image reading apparatus 40, the workflow ID of the workflow relevant to the request of step S221, and the item ID of the file format item, in the setting history information 424B. The specific period in the past refers to, for example, the period between the current time of day, and a time of day a predetermined time earlier than the current time of day. This also applies to other cases.

Upon deciding that the user-settable values identified at step S542 do not include the user-settable value that satisfies the display order determination condition in the display order determination condition information 424C (NO at step S543), or that the user-settable values, identified at step S542, and which satisfy the display order determination condition in the display order determination condition information 424C, do not include the user-settable value that was set the predetermined number of times or more, in the specific period in the past (NO at step S544), the image processing device 425A identifies the display order associated with the combination of the workflow **ID of** the workflow relevant to the request of step S221, and the item **ID** of the file format item, in the user-settable value information 24H (step S545), and finishes the operation specified in Fig. 29.

Upon deciding that the user-settable values, identified at step S542, and which satisfy the display order determination condition in the display order determination condition information 424C include user-settable values that were set the predetermined number of times or more, in the specific period in the past (YES at step S544), the image processing device 425A assigns a higher rank in the display order, to the user-settable values, identified at step S542, and which satisfy the display order determination condition in the display order determination condition information 424C, and were set the predetermined number of times or more, in the specific period in the past, than both of the user-settable value, identified at step S542, and which does not satisfy the display order determination condition in the display order determination condition information 424C, and the user-settable value, identified at step S542, and which satisfies the display order determination condition in the display order determination condition information 424C, but was not set the predetermined number of times or more, in the specific period in the past (step S546).

After finishing the operation of step S546, the image processing device 425A assigns a higher rank in the display order, to the user-settable value that was set more frequently in the specific period in the past, among the user-settable values, identified at step S542, and which satisfy the display order determination condition in the display order determination condition information 424C, and were set the predetermined number of times or more, in the specific period in the past (step S547).

Regarding the user-settable values that were set the same number of times in the specific period in the past, among the user-settable values, identified at step S542, and which satisfy the display order determination condition in the display order determination condition information 424C, and were set the predetermined number of times or more, in the specific period in the past, the image processing device 425A assigns a higher rank in the display order, to the user-settable value that was higher in the display order associated with the combination of the workflow ID of the workflow relevant to the request of step S221, and the item ID of the file format item, in the user-settable value information 24H.

After finishing the operation of step S547, the image processing device 425A assigns a higher rank in the display order, among the user-settable values, identified at step S542, and which do not satisfy the display order determination condition in the display order determination condition information 424C, and the user-settable values, identified at step S542, and which satisfy the display order determination condition in the display order determination condition information 424C, but were not set the predetermined number of times or more, in the specific period in the past, to the user-settable value that was higher in the display order associated with the combination of the workflow ID of the workflow relevant to the request of step S221, and the item ID of the file format item, in the user-settable value information 24H.

Upon deciding at step S541 that the user-settable value is not associated with the combination of the workflow ID of the workflow relevant to the request of step S221, and the item ID of the file format item, in the user-settable value information 24H (NO at step S541), the image processing device 425A executes the operation of step S549, which is similar to step S243 (see Fig. 21), and finishes the operation specified in Fig. 29.

As described thus far, the image processing system 420 assigns a higher rank in the display order, to the user-settable value that was set by the user a predetermined number of times or more, in the specific period in the past, than the user-settable value that was set by the user less than the predetermined number of times, in the specific period in the past (step S546).

In addition, the image processing system 420 assigns a higher rank in the display order, to the user-settable value that was set by the user more frequently in the specific period, among the user-settable values that were set by the user the predetermined number of times or more, in the specific period (step S547), and determines the display order of the user-settable values that were set by the user less than the predetermined number of times in the specific period, according to the instruction of the manager (step S548).

The mentioned arrangement enables the user to recognize the order of importance to the user, of each of a plurality of user-settable values, in view of the display order of the user-settable values, determined on the basis of the number of times that the user-settable value was set by the user in the specific period in the past. Therefore, the user can easily set the value for the setting item related to the workflow.

## Claims

1. An image processing system (20) comprising:
a first communication device (23) that communicates via a network with an image reading apparatus (40) having a scanner (44) that reads an image of a document;
a first operation device (21) to which an instruction of a user is inputted; and
a first control device (25) including a processor, and configured to act, when the processor executes an image processing program (24A), as an image processing device (25A) that executes a workflow, with respect to the image read by the scanner (44),
wherein, upon receipt through the first operation device (21), of a designation by a predetermined manager, of a system-settable value that a user of the image processing system (20) is permitted to set, out of the system-settable values that can be set for setting items related to the workflow, the image processing device (25A) sets the designated system-settable value, as a user-settable value.

2. The image processing system (20) according to claim 1,
wherein, upon receipt of designation made by the manager, of a plurality of system-settable values that may be set by the user, and of a display order, through the first operation device (21), the image processing device (25A) sets each of the plurality of system-settable values designated as the user-settable value, and determines the display order of the user-settable value, to be displayed when the user sets the value, according to the designated display order.

3. The image processing system (20) according to claim 2,
wherein the image processing device (25A) is configured to:
assign a higher rank in the display order, to the user-settable value that was set by the user a predetermined number of times or more in a specific period of past, than the user-settable value that was set less than the predetermined number of times in the specific period;
assign a higher rank in the display order, to the user-settable value that was set more frequently in the specific period, among the user-settable values that were set the predetermined number of times or more in the specific period; and
determine the display order of the user-settable values that were set less than the predetermined number of times in the specific period, according to an instruction of the manager.

4. An image reading apparatus (40) comprising:
a display device (42);
a scanner (44) that reads an image of a document;
a second communication device (45) that communicates via a network with an image processing system (20) that executes a workflow, with respect to the image read by the scanner (44); and
a second control device (47) including a processor, and configured to act, when the processor executes a workflow utilization program (46A), as a workflow utilization device (47A) that, upon receipt of information indicating a user-settable value that a user of the image processing system (20) is permitted to set for a setting item related to the workflow, from the image processing system (20) through the second communication device (45), causes the display device (42) to display the user-settable value indicated by information received.

5. The image reading apparatus (40) according to claim 4,
wherein, upon receipt of information indicating a plurality of user-settable values and a display order, from the image processing system (20) through the second communication device (45), the workflow utilization device (47A) causes the display device (42) to display the plurality of user-settable values indicated by information received, in the display order indicated by the information received.

6. The image reading apparatus (40) according to claim 5,
wherein the workflow utilization device (47A) adopts the user-settable value highest in the display order, as an initial value of the value for the setting item.

7. The image reading apparatus (40) according to claim 4, further comprising a second operation device (41) to which an instruction of a user is inputted,
wherein, upon receipt of an instruction designating one of the user-settable values displayed on the display device (42), through the second operation device (41), the workflow utilization device (47A) sets the designated user-settable value as the value for the setting item related to the workflow.

8. An image processing program (24A) being configured to cause a computer, including a first communication device (23) that communicates via a network with an image reading apparatus (40) including a scanner (44) that reads an image of a document, a first operation device (21) to which an instruction of a user is inputted, and a processor, to act, when the processor executes the image processing program (24A), as an image processing device (25A) that executes a workflow with respect to the image read by the scanner (44),
wherein, upon receipt through the first operation device (21), of a designation by a predetermined manager, of a system-settable value that a user of the image processing system (20) is permitted to set, out of the system-settable values that can be set for setting items related to the workflow, the image processing device (25A) sets the designated system-settable value, as a user-settable value.

9. A workflow utilization program (46A) being configured to cause a computer, including a display device (42), a scanner (44) that reads an image of a document, a second communication device (45) that communicates via a network with an image processing system (20) that executes a workflow, with respect to the image read by the scanner (44), and a processor, to act, when the processor executes the workflow utilization program (46A), as a workflow utilization device (47A) that, upon receipt of information indicating a user-settable value that a user of the image processing system (20) is permitted to set for a setting item related to the workflow, from the image processing system (20) through the second communication device (45), causes the display device (42) to display the user-settable value by the information received.
